# EUROPEAN PATENT APPLICATION

(11) **EP 2 058 923 A2**
(43) Date of publication of application: **13.05.2009**
(21) Application number: 08253657.4
(22) Date of filing: 07.11.2008
(51) Int. Cl.: H02K 1/17, H02K 1/27

(54) **Electric Machinery of Permeable Polar Face & Magnetic Circuit Sandwiched PM Magnetic Pole**

(30) Priority: 09.11.2007 US 979817
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

An electric machinery provided with a PM magnetic pole sandwiched by a permeable polar face (111) and a magnetic circuit (102) from an individual magnetic pole provides an innovative design of having disposed the PM magnetic pole sandwiched between the permeable polar face (111) and the magnetic circuit (102) from the individual magnetic pole to prevent PM magnetic pole from falling off and avoid PM magnetic pole magnetic force from being weakened by inverse excitation during the operation.

## Description

### BACKGROUND OF THE INVENTION

### (a) Field of the Invention

The present invention is related to an electric machinery with a permanent magnetic pole sandwiched by the permeable polar face and magnetic circuit of its individual magnetic pole, and more particularly, to a permanent magnet (PM) magnetic pole sandwiched by a permeable polar face and magnetic circuit of an individual magnetic pole that is disposed in various types of electric machinery of the prior art.

### (b) Description of the Prior Art:

Whereas a conventional AC or DC revolution or linear electric machinery either of commutator, brush, brushless, ring-brush, synchronous, asynchronous, internal revolving, external revolving, revolving with an electric magnetic structure at middle, double-acting, triple-acting, multi-layer, multi-ring, linear, DC brushless, or inverter electric machinery, or an electric machinery functioning as a generator or as a motor or as both a generator and a motor, coupling transmission device, as an EME vortex coupling transmission device, or an EME vortex braking device, is usually provided with a magnetic pole structure to produce EM effect operation.

A magnetic pole structure of the prior art is comprised of:
--- a conducted winding exciting magnetic pole having on its polar face disposed with a PM magnetic pole indicate cumulative or differential; or
--- a magnetic pole structure of DC or AC electrically conducted winding excitation; or
--- a PM magnetic pole structure.

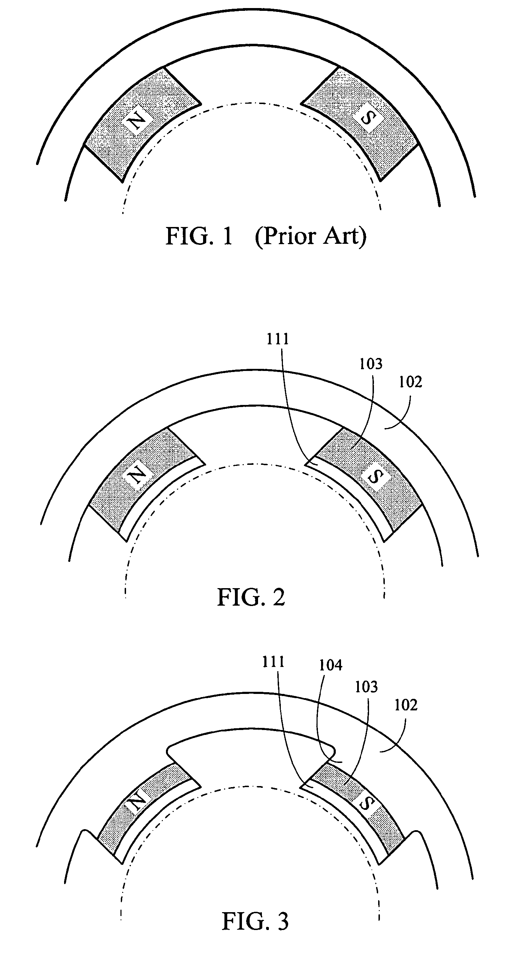

As illustrated in Fig. 1 of the accompanying drawings for a schematic view showing a structure of a conventional PM magnetic pole, the structure features an advantage of not requiring a magnetic field exciting current but is found with a flaw of having its magnetic power to be weakened by inverse excitation in the course of the operation of an electric machinery.

### SUMMARY OF THE INVENTION

The primary purpose of the present invention is to provide an electric machinery that has its PM magnetic pole sandwiched by a permeable polar face and magnetic circuit of its individual magnetic pole, and more particularly, to a permanent magnet (PM) magnetic pole sandwiched by a permeable polar face and magnetic circuit of an individual magnetic pole that is disposed in various types of electric machinery of the prior art.

The electric machinery may be disposed in a way that polarities of two PM magnetic poles respectively sandwiched by permeable polar face and magnetic circuit of abutted individual magnetic poles are identical with or opposite to each other.

In the electric machinery of PM magnetic pole sandwiched by permeable polar face and magnetic circuit, the PM magnetic pole is prevented from having its magnetic power weakened by inverse excitation during the operation of the electric machinery due to an innovative design of having a PM magnetic pole sandwiched by a permeable polar face and magnetic circuit from an individual magnetic pole.

### BRIEF DESCRIPTION OF THE DRAWINGS

Fig. 1 is a schematic view showing a structure of a conventional PM magnetic pole.
Fig. 2 is a schematic view showing a structure of the present invention applied in a PM magnetic pole sandwiched by permeable polar face and magnetic circuit from an individual magnetic pole.
Fig. 3 is a schematic view showing a structure of the present invention applied in a PM magnetic pole sandwiched by permeable polar face and magnetic circuit at neck of the magnetic pole from an individual magnetic pole.

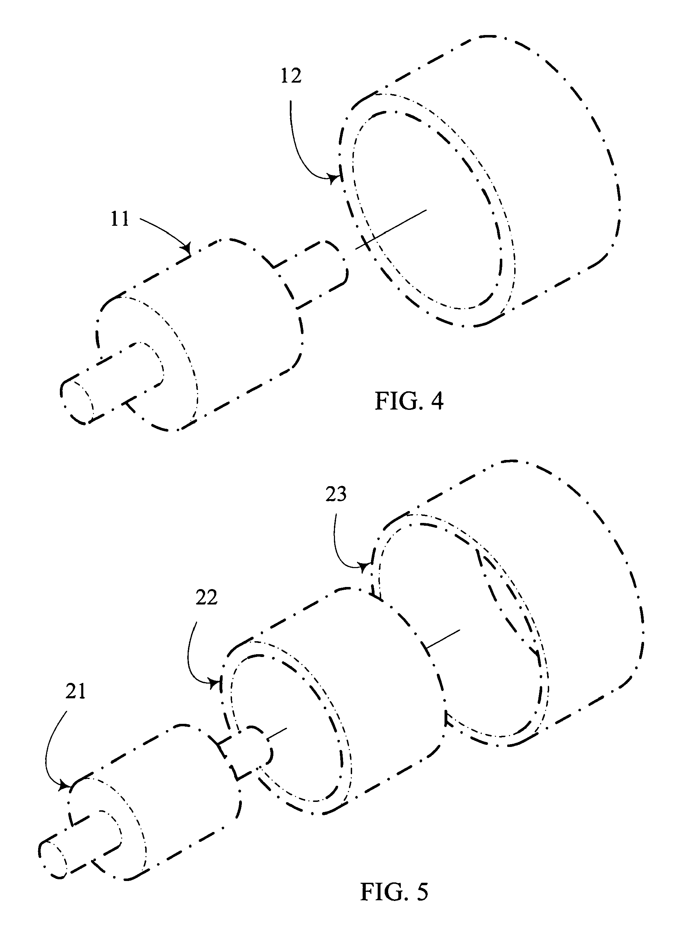

Fig. 4 is a schematic view showing a summary profile of a structure of a main unit of the present invention applied in a cylinder electric machinery without casing, bearing, locking member, cooling van, and optional conductive device.
Fig. 5 is a schematic view showing a summary profile of a structure of a main unit of the present invention applied in a coaxial, 3-ring type electric machinery without casing, bearing, locking member, cooling van, and optional conductive device.

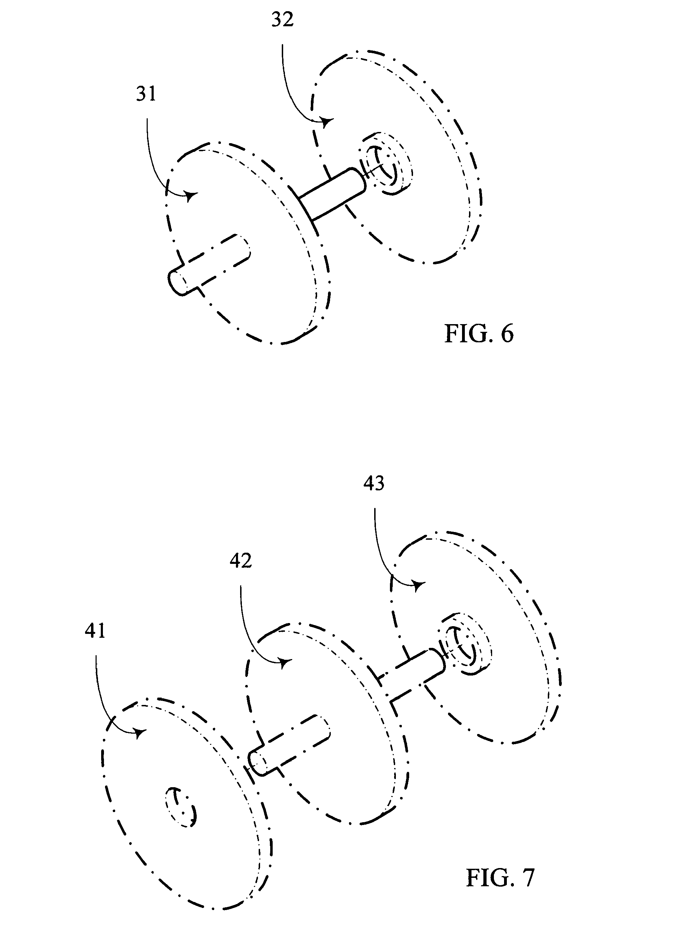

Fig. 6 is a schematic view showing a summary profile of a structure of a main unit of the present invention applied in a coaxial, double layer type electric machinery in plate form without casing, bearing, locking member, cooling van, and optional conductive device.
Fig. 7 is a schematic view showing a summary profile of a structure of a main unit of the present invention applied in a coaxial, 3-layer type electric machinery in plate form without casing, bearing, locking member, cooling van, and optional conductive device.

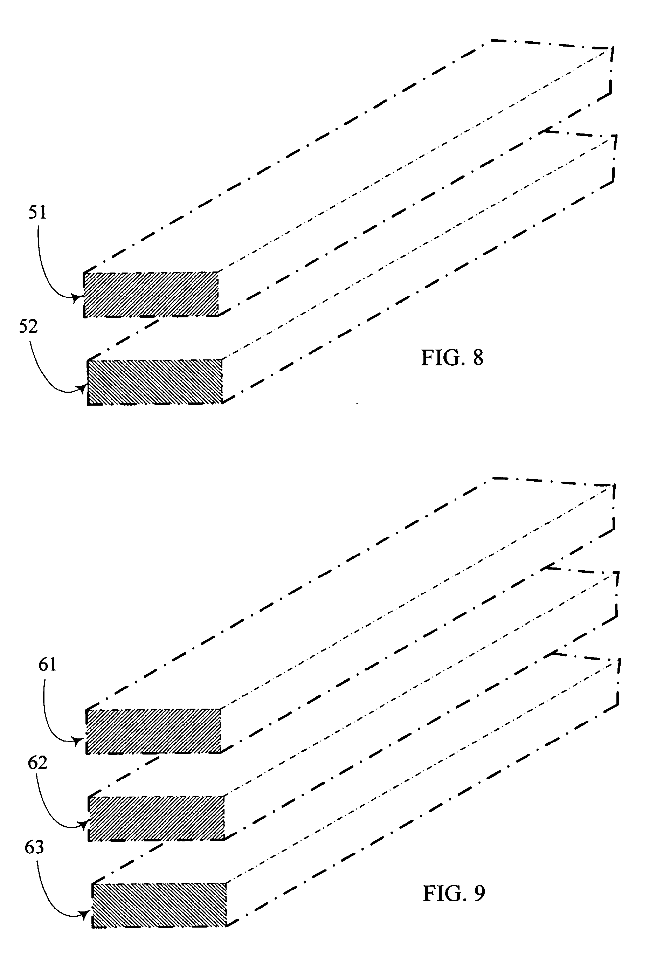

Fig. 8 is a schematic view showing a summary profile of a structure of a main unit of the present invention applied in a linear, double layer type electric machinery without casing, bearing, locking member, cooling van, and optional conductive device.
Fig. 9 is a schematic view showing a summary profile of a structure of a main unit of the present invention applied in a linear, 3-layer type electric machinery without casing, bearing, locking member, cooling van, and optional conductive device.

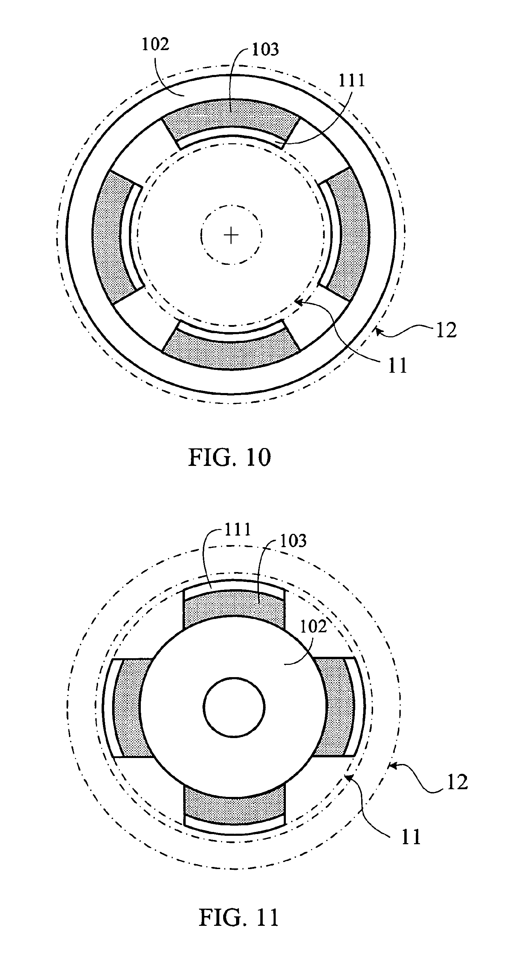

Fig. 10 is a schematic view showing a structure of the present invention applied in a cylinder electric machinery structure, wherein a PM magnetic pole sandwiched by a permeable polar face and a magnetic circuit from an individual magnetic pole is disposed on an EME coupling aspect of an outer layer electric machinery structure to execute EME coupling with an inner layer electric machinery structure.
Fig. 11 is a schematic view showing a structure of the present invention applied in a cylinder electric machinery structure, wherein a PM magnetic pole sandwiched by a permeable polar face and a magnetic circuit from an individual magnetic pole is disposed on an EME coupling aspect of an inner layer electric machinery structure in a direction facing of the outer layer electric machinery structure to execute EME coupling with an outer layer electric machinery structure.

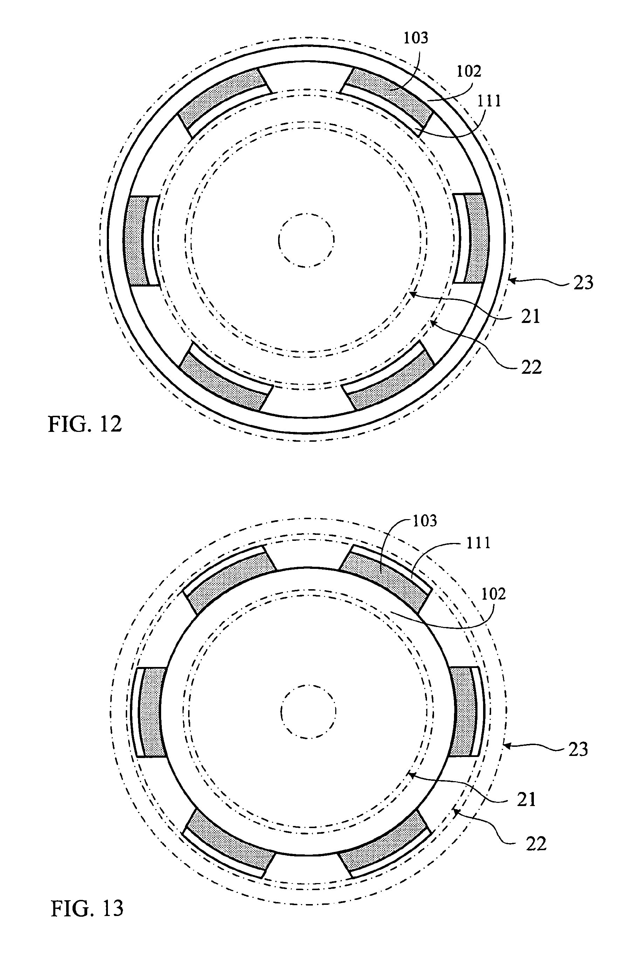

Fig. 12 is a schematic view showing a structure of the present invention applied in a coaxial, 3-ring type electric machinery structure, wherein a PM magnetic pole sandwiched by a permeable polar face and a magnetic circuit from an individual magnetic pole is disposed on an EME coupling aspect of an outer ring electric machinery structure in a direction facing the mid ring electric machinery structure to execute EME coupling with a mid ring electric machinery structure.
Fig. 13 is a schematic view showing a structure of the present invention applied in a coaxial, 3-ring type electric machinery structure, wherein a PM magnetic pole sandwiched by a permeable polar face and a magnetic circuit from an individual magnetic pole is disposed on an EME coupling aspect of a mid ring electric machinery structure in a direction facing the outer ring electric machinery structure to respectively execute EME coupling with an outer and an inner ring electric machinery structures.

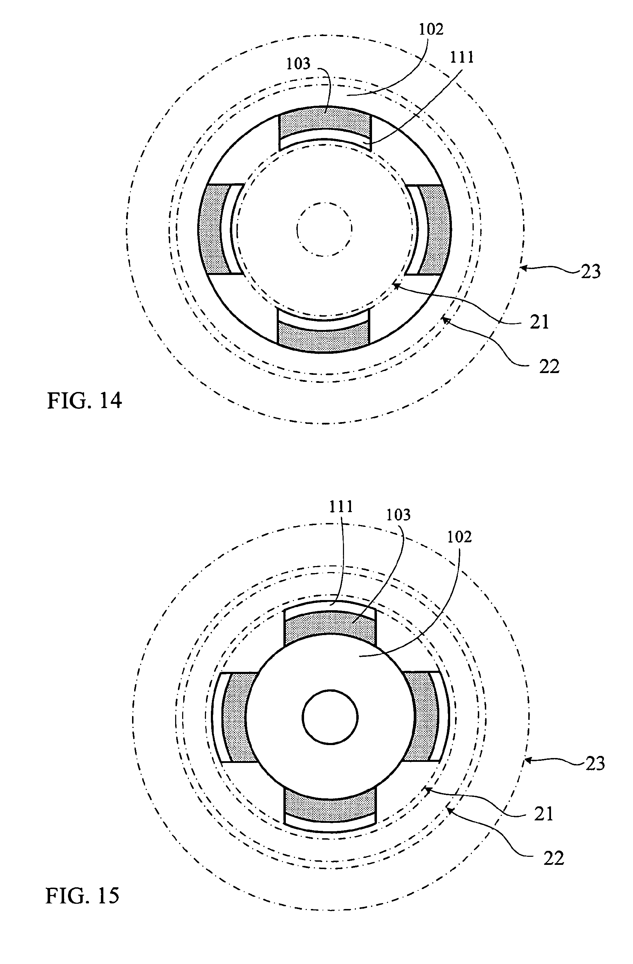

Fig. 14 is a schematic view showing a structure of the present invention applied in a coaxial 3-ring type electric machinery structure, wherein a PM magnetic pole sandwiched by a permeable polar face and a magnetic circuit from an individual magnetic pole is disposed on an EME coupling aspect of a mid ring electric machinery structure in a direction facing an inner ring electric machinery structure to execute EME coupling with an inner ring electric machinery structure.
Fig. 15 is a schematic view showing a structure of the present invention applied in a coaxial 3-ring type electric machinery structure, wherein a PM magnetic pole sandwiched by a permeable polar face and a magnetic circuit from an individual magnetic pole is disposed on an EME coupling aspect of an inner ring electric machinery structure in a direction facing the mid ring electric machinery structure to execute EME coupling with a mid ring electric machinery structure.

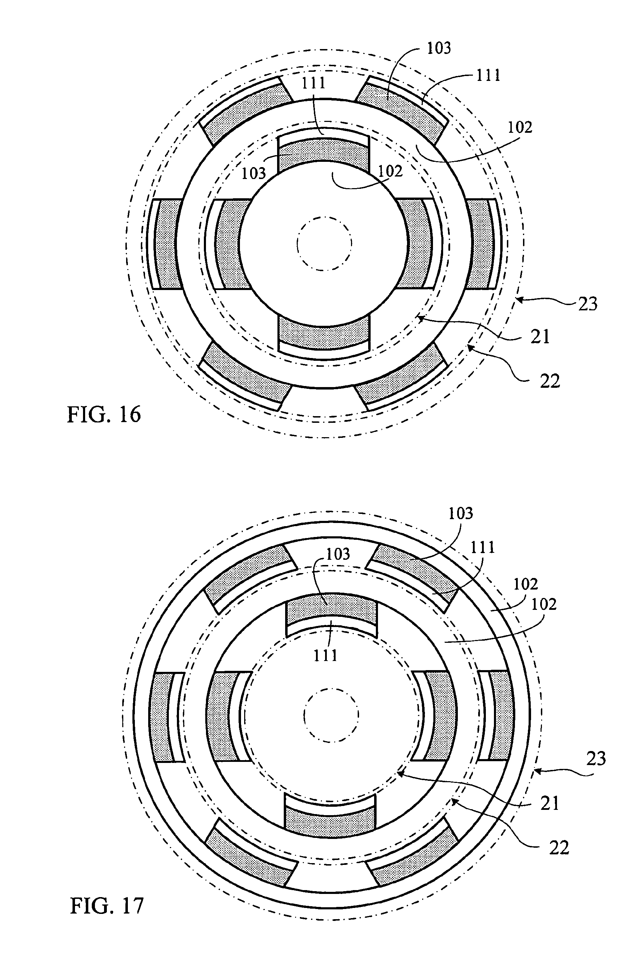

Fig. 16 is a schematic view showing a structure of the present invention applied in a coaxial 3-ring type electric machinery structure, wherein two PM magnetic poles with each being sandwiched by a permeable polar face and a magnetic circuit from an individual magnetic pole are respectively disposed on an EME coupling aspect of an inner ring electric machinery structure to execute EME coupling with a mid ring electric machinery structure and on an EME coupling aspect of the mid ring electric machinery structure to execute EME coupling with an outer ring electric machinery structure.
Fig. 17 is a schematic view showing a structure of the present invention applied in a coaxial 3-ring type electric machinery structure, wherein two PM magnetic poles with each being sandwiched by a permeable polar face and a magnetic circuit from an individual magnetic pole are respectively disposed on an EME coupling aspect of an outer ring electric machinery structure to execute EME coupling with a mid ring electric machinery structure and on an EME coupling aspect of the mid ring electric machinery structure to execute EME coupling with an inner ring electric machinery structure.

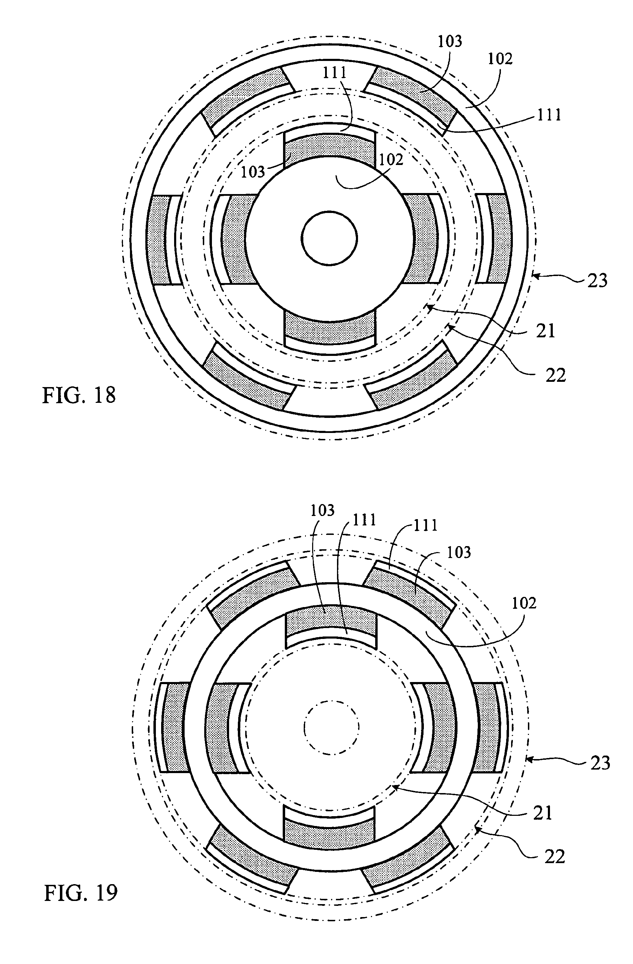

Fig. 18 is a schematic view showing a structure of the present invention applied in a coaxial 3-ring type electric machinery structure, wherein two PM magnetic poles with each being sandwiched by a permeable polar face and a magnetic circuit from an individual magnetic pole are respectively disposed on an EME coupling aspect of an outer ring electric machinery structure in a direction facing a mid ring electric machinery structure and on an EME coupling aspect of an inner ring electric machinery structure in a direction facing a mid ring electric machinery structure.
Fig. 19 is a schematic view showing a structure of the present invention applied in a coaxial 3-ring type electric machinery structure, wherein two PM magnetic poles each sandwiched by a permeable polar face and a magnetic circuit from an individual magnetic pole are respectively disposed on an EME coupling aspect of a mid ring electric machinery structure to execute EME coupling with an outer ring electric machinery structure and an inner ring electric machinery structure in a direction facing the outer ring electric machinery structure and in another direction facing the inner ring electric machinery structure.

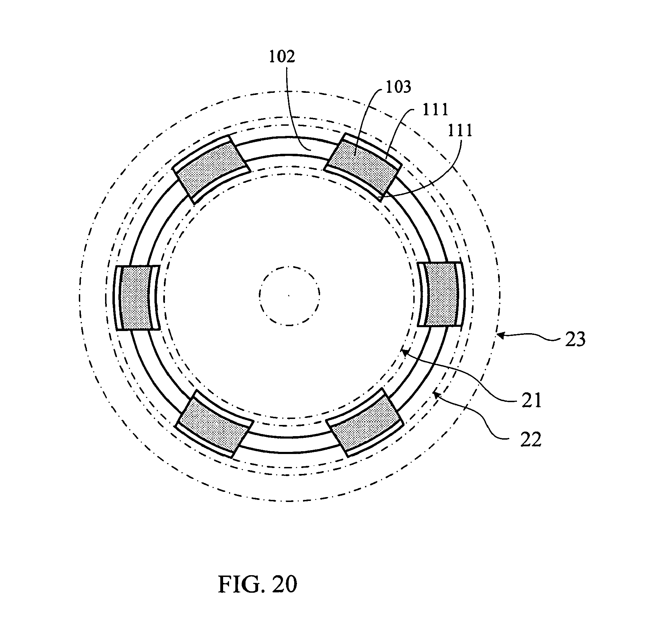

Fig. 20 is a schematic view showing a structure of the present invention applied in a coaxial 3-ring type electric machinery structure wherein a PM magnetic pole to execute coupling with an inner ring electric machinery structure and an outer ring electric machinery structure on both sides is disposed on a mid ring electric machinery structure for executing EME coupling with an inner ring electric machinery structure and an outer ring electric machinery structure to constitute a magnetic pole; and two permeable polar faces are each disposed on both polar faces on both ends of the PM magnetic pole.

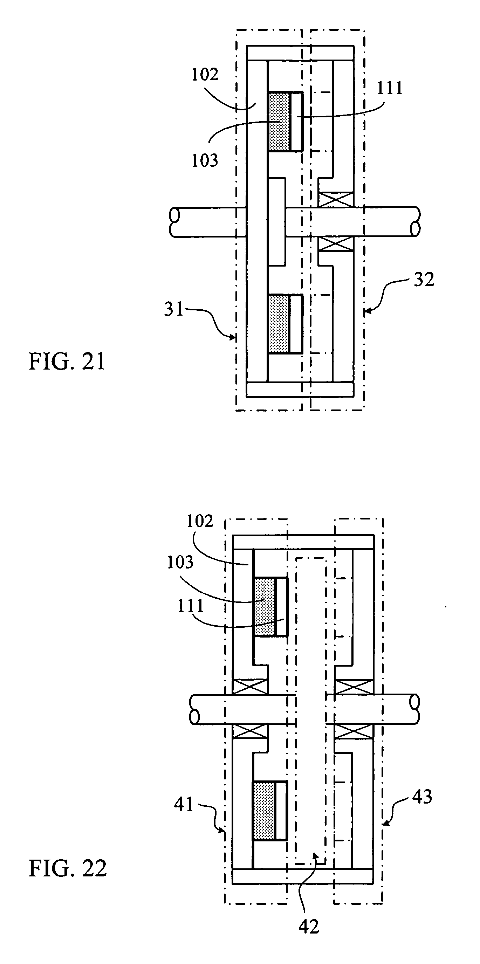

Fig. 21 is a schematic view showing a structure of the present invention applied in a double layer type plate electric machinery structure wherein a PM magnetic pole sandwiched by a permeable polar face and a magnetic circuit from an individual magnetic pole is disposed on an EME coupling aspect of the inner layer plate electric machinery structure in a direction facing an outer layer plate electric machinery structure.
Fig. 22 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of an inner layer plate electric machinery structure in a direction facing a mid layer plate electric machinery structure.

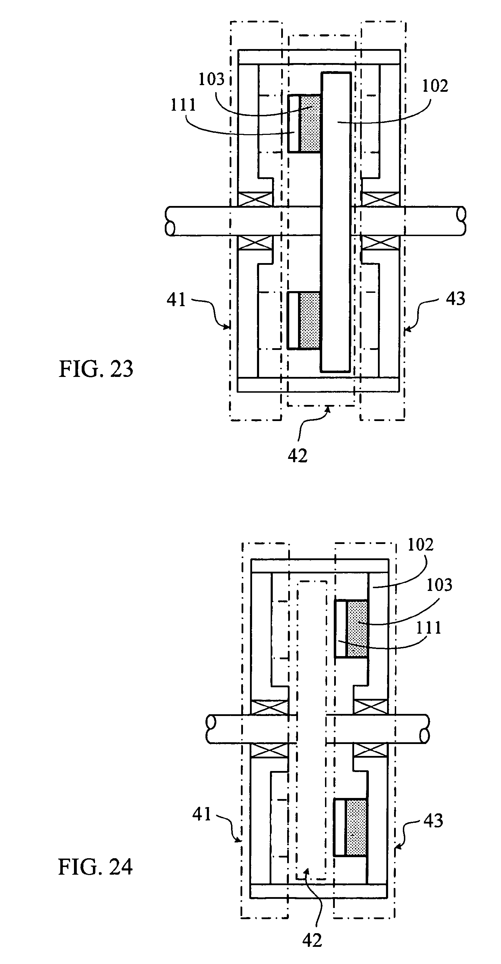

Fig. 23 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of a mid layer plate electric machinery structure in a direction facing an inner layer plate electric machinery structure.
Fig. 24 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of an outer layer plate electric machinery structure in a direction facing a mid layer plate electric machinery structure.

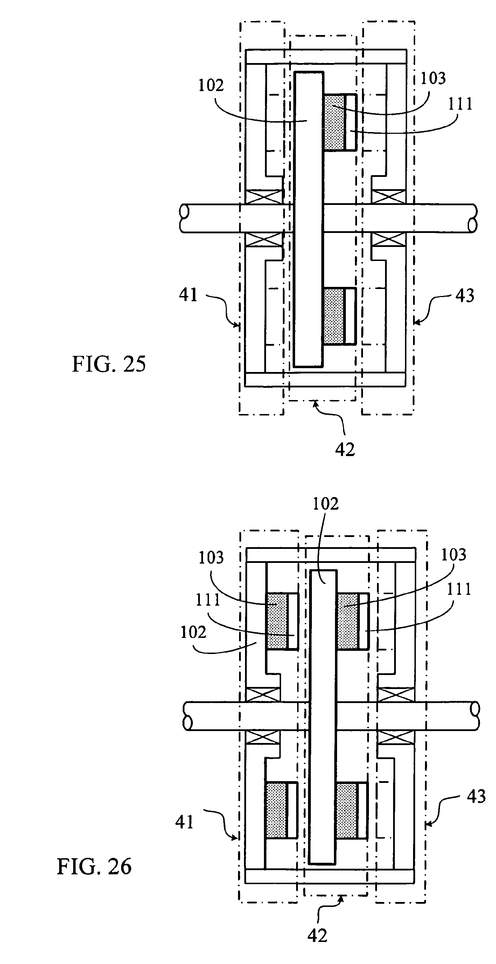

Fig. 25 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of a mid layer plate electric machinery structure in a direction facing an outer layer plate electric machinery structure.
Fig. 26 is a schematic view showing a structure of the present invention applied in a coaxial 3-layer type plate electric machinery structure wherein two PM magnetic poles with each being sandwiched by a permeable polar face and a magnetic circuit from an individual magnetic pole are respectively disposed on an EME coupling aspect of an inner layer plate electric machinery structure in a direction facing a mid layer plate electric machinery structure, and on an EME coupling aspect of a mid layer plate electric machinery structure in a direction facing an outer layer plate electric machinery structure.

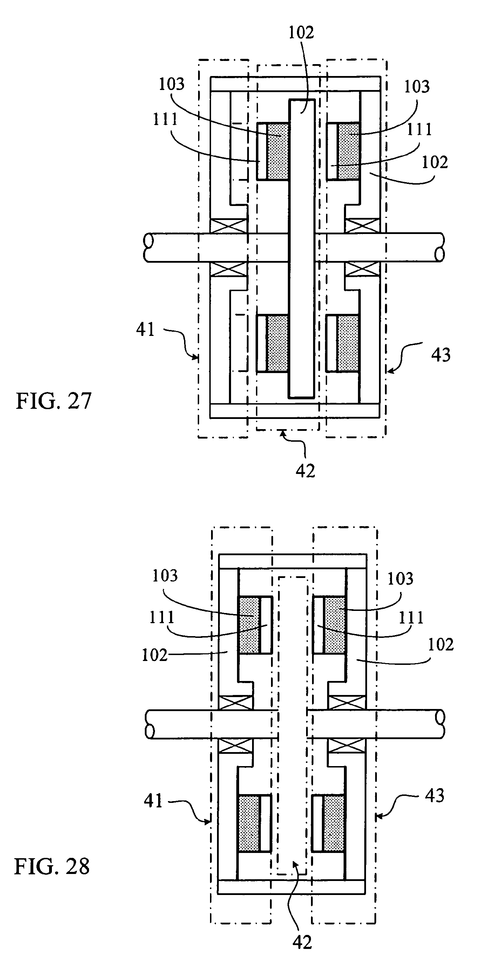

Fig. 27 is a schematic view showing a structure of the present invention applied in a coaxial 3-layer type plate electric machinery structure wherein two PM magnetic poles with each being sandwiched by a permeable polar face and a magnetic circuit from an individual magnetic pole are respectively disposed on an EME coupling aspect of an outer layer plate electric machinery structure in a direction facing a mid layer plate electric machinery structure, and on an EME coupling aspect of a mid layer plate electric machinery structure in a direction facing an inner layer plate electric machinery structure.
Fig. 28 is a schematic view showing a structure of the present invention applied in a coaxial 3-layer type plate electric machinery structure wherein two PM magnetic poles with each being sandwiched by a permeable polar face and a magnetic circuit from an individual magnetic pole are respectively disposed on an EME coupling aspect of an inner layer plate electric machinery structure, and on an EME coupling aspect of an outer layer plate electric machinery structure to respectively execute EME coupling with a mid layer plate electric machinery structure.

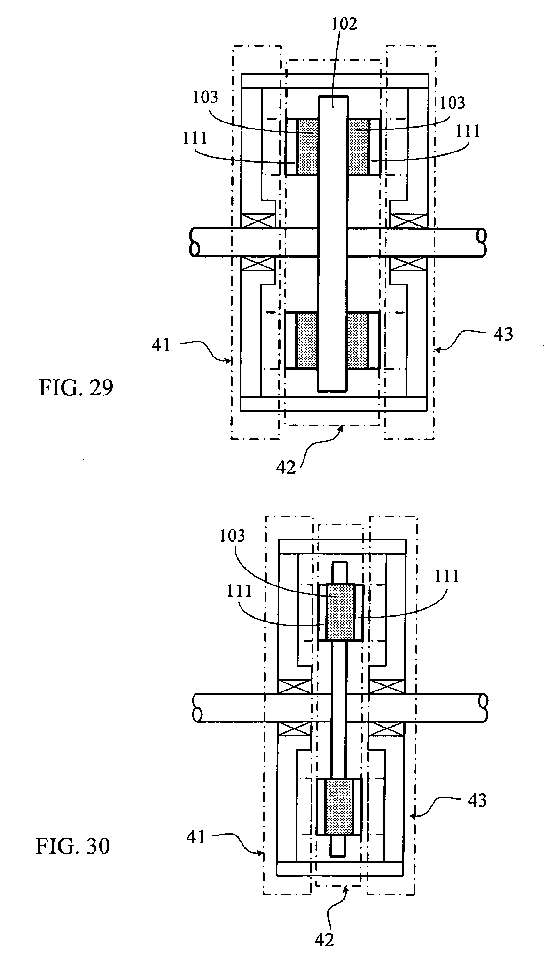

Fig. 29 is a schematic view showing a structure of the present invention applied in a coaxial 3-layer type plate electric machinery structure wherein two PM magnetic poles each being sandwiched by a permeable polar face and a magnetic circuit from an individual magnetic pole are respectively disposed on both sides of a mid layer plate electric machinery structure to execute EME coupling with an inner layer plate electric machinery structure and an outer layer plate electric machinery structure disposed on both sides of the present invention.
Fig. 30 is a schematic view showing a structure of the present invention applied in a coaxial 3-layer type plate electric machinery structure wherein a mid layer plate electric machinery structure to execute EME coupling with an inner layer plate electric machinery structure and an outer layer plate electric machinery structure on both sides of the present invention is disposed with a PM magnetic pole to constitute a magnetic pole and two permeable magnetic faces are each disposed on both polar faces on both ends of the PM magnetic pole.

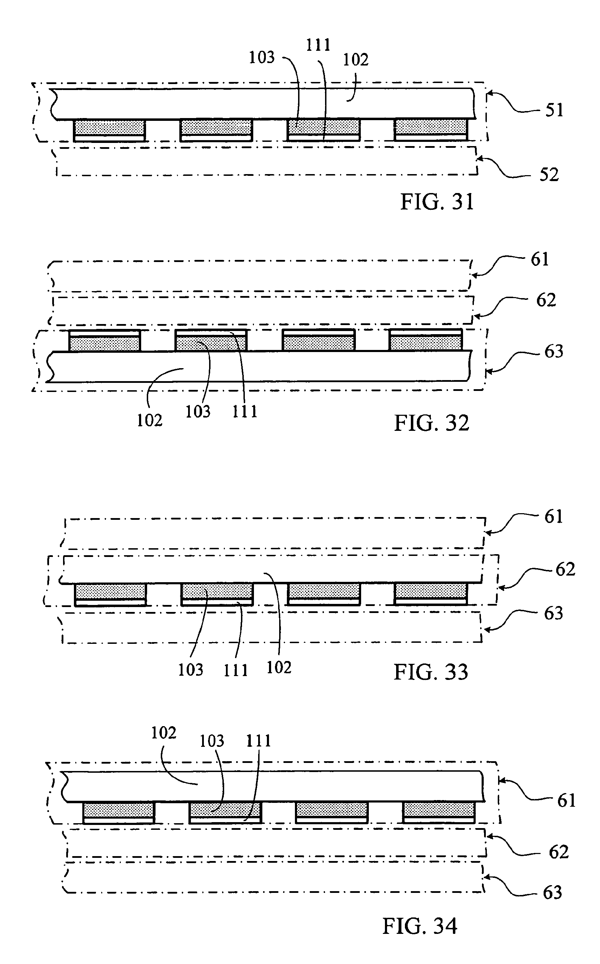

Fig. 31 is a schematic view showing a structure of the present invention applied in a double layer type linear electric machinery structure wherein the double linear electric machinery has disposed on an EME coupling aspect of an inner layer linear electric machinery structure a PM magnetic pole sandwiched by a permeable polar face and a magnetic circuit from an individual magnetic pole.
Fig. 32 is a schematic view showing a structure of the present invention applied in a 3-layer type linear electric machinery structure wherein a PM magnetic pole sandwiched by a permeable polar face and a magnetic circuit from an individual magnetic pole is disposed on an outer layer linear electric machinery structure to execute EME coupling with a mid layer linear electric machinery structure.
Fig. 33 is a schematic view showing a structure of the present invention applied in a 3-layer type linear electric machinery structure wherein a PM magnetic pole sandwiched by a permeable polar face and a magnetic circuit from an individual magnetic pole is disposed on an EME coupling aspect of a mid layer linear electric machinery structure in a direction facing an outer layer linear electric machinery structure.
Fig. 34 is a schematic view showing a structure of the present invention applied in a 3-layer type linear electric machinery structure wherein a PM magnetic pole sandwiched by a permeable polar face and a magnetic circuit from an individual magnetic pole is disposed on an EME coupling aspect of an inner layer linear electric machinery structure in a direction facing a mid layer linear electric machinery structure.

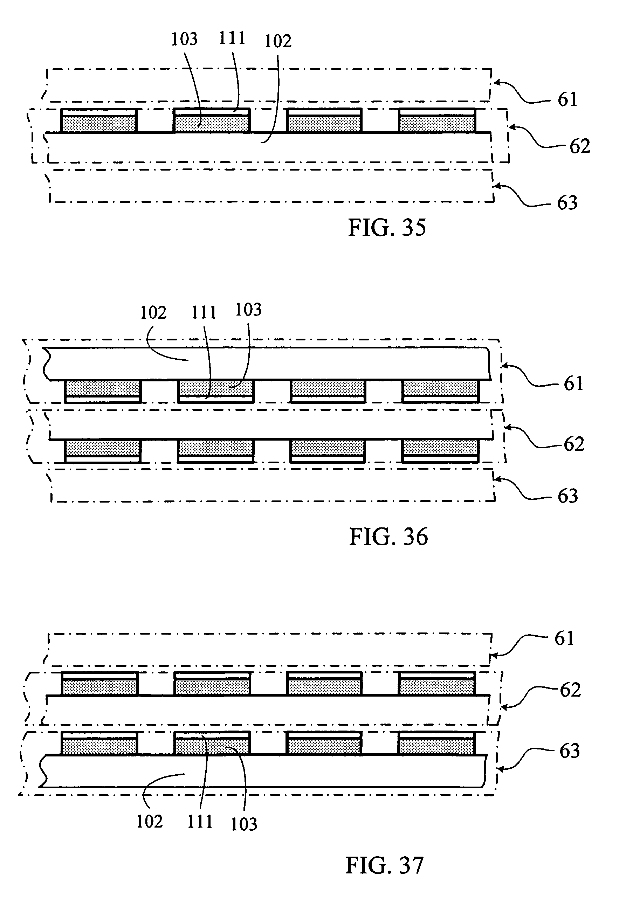

Fig. 35 is a schematic view showing a structure of the present invention applied in a 3-layer type linear electric machinery structure wherein a PM magnetic pole sandwiched by a permeable polar face and a magnetic circuit from an individual magnetic pole is disposed to an EME coupling aspect of a mid layer linear electric machinery structure in a direction facing an inner layer linear electric machinery structure.
Fig. 36 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on an EME coupling aspect of a mid layer linear electric machinery structure to execute EME coupling with an outer layer linear electric machinery structure, and on an EME coupling aspect of an inner layer linear electric machinery structure to execute EME coupling with a mid layer linear electric machinery structure.
Fig. 37 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on an EME coupling aspect of an outer layer linear electric machinery structure to execute EME coupling with a mid layer linear electric machinery structure, and on an EME coupling aspect of a mid layer linear electric machinery structure to execute EME coupling with an inner layer linear electric machinery structure.

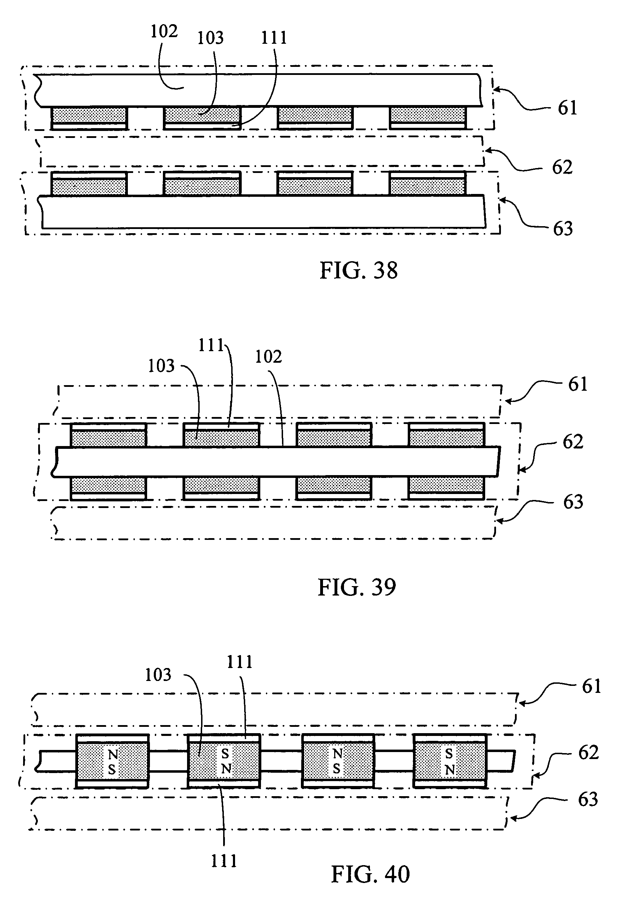

Fig. 38 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on an EME coupling aspect of an outer layer linear electric machinery structure to execute EME coupling with a mid layer linear electric machinery structure, and on an EME coupling aspect of an inner layer linear electric machinery structure to execute EME coupling with a mid layer linear electric machinery structure.
Fig. 39 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on two EME coupling aspects of both sides of a mid layer linear electric machinery structure to respectively execute EME coupling with an outer layer linear electric machinery structure and an inner layer linear electric machinery structure.
Fig. 40 is a schematic view showing a structure of the present invention applied in a 3-layer type linear electric machinery structure wherein a PM magnetic pole is disposed on a mid layer linear electric machinery structure to execute EME coupling with an outer layer linear electric machinery structure and an inner layer linear electric machinery structure, and two permeable polar faces are respectively disposed on both polar faces on both ends of the PM magnetic pole.

### LISTING OF COMPONENT AND CORRESPONDING LABEL

102: magnetic circuit
103: PM magnetic pole
104: neck portion of a magnetic circuit of magnetic pole
11: inner layer electric machinery structure of cylinder electric machinery
12: outer layer electric machinery structure of cylinder electric machinery
21: inner ring electric machinery structure of coaxial 3-ring type electric machinery
22: mid ring electric machinery structure of coaxial 3-ring type electric machinery
23: outer ring electric machinery structure of coaxial 3-ring type electric machinery
31: inner layer plate electric machinery structure of coaxial double layer type plate electric machinery
32: outer layer plate electric machinery structure of coaxial double layer type plate electric machinery
41: inner layer plate electric machinery structure of coaxial 3-layer type plate electric machinery
42: mid layer plate electric machinery structure of coaxial 3-layer type plate electric machinery
43: outer layer plate electric machinery structure of coaxial 3-layer type plate electric machinery
51: inner layer linear electric machinery structure of double layer type linear electric machinery
52: outer layer linear electric machinery structure of double layer type linear electric machinery
61: inner layer linear electric machinery structure of 3-layer type linear electric machinery
62: mid layer linear electric machinery structure of 3-layer type linear electric machinery
63: outer layer linear electric machinery structure of 3-layer type linear electric machinery
111: permeable polar face

### DETAILED DESCRIPTION OF THE PREFERRED EMBODIMENTS

The present invention discloses an electric machinery provided with a PM magnetic pole sandwiched by a permeable polar face and a magnetic circuit, which is related to a PM magnetic pole 103 sandwiched by a permeable polar face 111 and a magnetic circuit 102 from an individual magnetic pole disposed in various types of electric machinery of the prior art. The electric machinery of this invention may be disposed in a way that polarities of two PM magnetic poles respectively sandwiched by a permeable polar face and a magnetic circuit of abutted individual magnetic poles are identical with or opposite to each other.

Fig. 2 is a schematic view showing a structure of the present invention applied in a PM magnetic pole sandwiched by permeable polar face and magnetic circuit from an individual magnetic pole; as illustrated in Fig. 2, in the electric machinery provided with the PM magnetic pole sandwiched by the permeable polar face and the magnetic circuit from an individual magnetic pole, a permeable polar face 111 is disposed to sandwich the PM magnetic pole jointly with the magnetic circuit 102 to constitute magnetic pole; the magnetic circuit 102 and the permeable polar face 111 are comprised of a material of silicon steel, steel, or iron providing good permeability and made in an integral part or a stack of multiple sheets by lamination, or made by metallurgy from the dust of permeable material; a polar face of the permeable polar face 111 faces a structure of another electric machinery that interacts with the permeable polar face 111 to execute EME; and the polar face of the permeable polar face 111 may be selected to indicate a convex, concave, or flat surface, or may be further disposed with a groove to indicate protrusion and indention pattern or a specific geometric form as applicable.

Fig. 3 is a schematic view showing a structure of the present invention applied in a PM magnetic pole sandwiched by permeable polar face and magnetic circuit at neck of the magnetic pole from an individual magnetic pole.

As illustrated in Fig. 3, in the electric machinery provided with the PM magnetic pole sandwiched by the permeable polar face and the magnetic circuit from an individual magnetic pole, the individual magnetic pole can be further constituted by using the neck portion of the magnetic circuit of magnetic pole 104 and the permeable polar face 111 to sandwich a PM magnetic pole 103; the magnetic circuit 102, the neck portion of the magnetic circuit of magnetic pole 104, and the permeable polar face 111 are comprised of a material of silicon steel, steel, or iron providing good permeability and made in an integral part or a stack of multiple sheets by lamination, or made by metallurgy from the dust of permeable material; a polar face of the permeable polar face 111 faces a structure of another electric machinery that interacts with the permeable polar face 111 to execute EME; and the polar face of the permeable polar face 111 may be selected to indicate a convex, concave, or flat surface, or may be further disposed with a groove to indicate protrusion and indention pattern or a specific geometric form as applicable.

For example, ways of having the PM magnetic pole 103 sandwiched by the permeable polar face 111 and the magnetic circuit 102 from an individual magnetic pole in the electric machinery provided with a PM magnetic pole sandwiched by the permeable polar face and the magnetic circuit include having a mechanical locking member to clamp or secure, a screw and a nut structure to lock up, a rivet to secure, a pin and a pinhole structure to fix, or a packing means in proper size and selected geometric form to insert, a magnetic circuit structure to clamp, a casing to clamp, a dedicated structural member to clamp, an adhesion to bind the PM magnetic pole 103, or having any other means of the prior art to secure the PM magnetic pole 103.

The electric machinery provided with a PM magnetic pole sandwiched by the permeable polar face and the magnetic circuit may operate with a DC or AC revolution electrical machinery or a linear electric machinery including commutator brush, brushless, ring brush, synchronous, asynchronous, internal revolving, external revolving, revolving with an electric machinery structure at middle, double-acting, triple-acting, multi-layer, multi-ring, linear, DC brushless, or inverter electric machinery, or an electric machinery functioning as a generator or as a motor or as both a generator and a motor, coupling transmission device, as an EME vortex coupling transmission device, or an EME vortex braking device for functional operation.

In the electric machinery of PM magnetic pole sandwiched by permeable polar face and magnetic circuit, the PM magnetic pole is prevented from falling off due to shaking or from having its magnetic power weakened by inverse excitation during the operation of the electric machinery due to an innovative design of having a PM magnetic pole 103 sandwiched by a permeable polar face 111 and magnetic circuit 102 from an individual magnetic pole.

Types of electric machinery applying the electric machinery provided with a PM magnetic pole sandwiched by the permeable polar face and the magnetic circuit include:
1. A cylinder electric machinery in a construction comprised of an inner layer electric machinery structure and an outer layer electric machinery structure, including an inner layer electric machinery structure 11 and an outer layer electric machinery structure 12 as illustrated in Fig. 4 showing a schematic view of a summary profile of a structure of a main unit of the present invention applied in a cylinder electric machinery without casing, bearing, locking member, cooling van, and optional conductive device;
2. A coaxial 3-ring type electric machinery to engage coaxial operation by insertion of an inner ring, a mid ring, and an outer ring electric machinery structures including an inner ring electric machinery structure 21, a mid ring electric machinery structure 22, and an outer ring electric machinery structure 23 as illustrated in Fig. 5 for a schematic view showing a summary profile of a structure of a main unit of the present invention applied in a coaxial 3-ring type electric machinery without casing, bearing, locking member, cooling van, and optional conductive device;
3. A coaxial double layer type plate electric machinery comprised of two layers of electric machinery structure laminated to engage in coaxial operation includes an inner layer plate electric machinery structure 31 and an outer layer plate electric machinery structure 32 as illustrated in Fig. 6 for a schematic view showing a summary profile of a structure of a main unit of the present invention applied in a coaxial double layer type electric machinery in plate form without casing, bearing, locking member, cooling van, and optional conductive device;
4. A coaxial 3-layer type plate electric machinery comprised of an inner, a mid, and an outer layer electric machinery structures laminated to engage coaxial operation includes an inner layer plate electric machinery structure 41, a mid layer plate electric machinery structure 42, and an outer layer plate electric machinery structure 43 as illustrated in Fig. 7 for a schematic view showing a summary profile of a structure of a main unit of the present invention applied in a coaxial 3-layer type electric machinery in plate form without casing, bearing, locking member, cooling van, and optional conductive device;
5. A linearly coupled double layer type linear electric machinery comprised of two layers of linear electric machinery structures includes an inner layer linear electric machinery structure 51 and an outer layer linear electric machinery structure 52 as illustrated in Fig. 8 for a schematic view showing a summary profile of a structure of a main unit of the present invention applied in a double layer type linear electric machinery without casing, bearing, locking member, cooling van, and optional conductive device; and
6. A linearly coupled 3-layer type linear electric machinery comprised of a inner layer, a mid layer , and an outer layer linear electric machinery structures includes an inner layer linear electric machinery structure 61, a mid layer linear electric machinery structure 62, and an outer layer linear electric machinery structure 63 as illustrated in Fig. 9 for a schematic view showing a summary profile of a structure of a main unit of the present invention applied in a 3-layer type linear electric machinery without casing, bearing, locking member, cooling van, and optional conductive device.

For the present invention to be applied in those application examples of various types of structure described below, including two-piece electric machinery structure and 3-piece electric machinery structure, they may be comprised of an electric machinery structure comprised of more elements according to the same operation principle; therefore, it will not be elaborated herein.

Now referring to Fig. 9 for a schematic view showing a structure of the present invention applied in a cylinder electric machinery structure, a PM magnetic pole sandwiched by a permeable polar face and a magnetic circuit from an individual magnetic pole is disposed for an outer layer electric machinery structure to execute EME coupling to an inner layer electric machinery structure.

As illustrated in Fig. 10, in the cylinder electric machinery structure, an outer layer electric machinery structure 12 to execute EME coupling with the inner layer electric machinery structure 11 has provided on its EME coupling aspect in a direction facing an inner layer electric machinery structure a PM magnetic pole 103 sandwiched by the permeable polar face 111 and the magnetic circuit 102 from an individual magnetic pole thus to constitute a cylinder electric machinery provided with a PM magnetic pole sandwiched by the permeable polar face and the magnetic circuit from the individual magnetic pole.

Fig. 11 is a schematic view showing a structure of the present invention applied in a cylinder electric machinery structure, wherein a PM magnetic pole sandwiched by a permeable polar face and a magnetic circuit from an individual magnetic pole is disposed on an EME coupling aspect of an inner layer electric machinery structure in a direction facing an outer layer electric machinery structure to execute EME coupling with an outer layer electric machinery structure.

As illustrated in Fig. 11 for a cylinder electric machinery structure, the inner layer electric machinery structure 11 to execute EME coupling with the outer layer electric machinery structure 12 has provided on its EME coupling aspect in a direction facing the outer layer electric machinery structure 12 a PM magnetic pole 103 sandwiched by the permeable polar face 111 and the magnetic circuit 102 from an individual magnetic pole thus to constitute a cylinder electric machinery provided with the PM magnetic pole sandwiched by the permeable polar face and the magnetic circuit from the individual magnetic pole.

Fig. 12 is a schematic view showing a structure of the present invention applied in a coaxial 3-ring type electric machinery structure, wherein a PM magnetic pole sandwiched by a permeable polar face and a magnetic circuit from an individual magnetic pole is disposed on an EME coupling aspect of an outer ring electric machinery structure to execute EME coupling with a mid ring electric machinery structure in a direction facing the mid ring electric machinery structure.

As illustrated in Fig. 12, in a coaxial 3-ring type electric machinery structure, the PM magnetic pole 103 sandwiched by a permeable polar face 111 and a magnetic circuit 102 from an individual magnetic pole to execute EME interaction with the mid ring electric machinery structure 22 is disposed on an EME coupling aspect of the outer ring electric machinery structure 23 in a direction facing the mid ring electric machinery structure 22 for executing EME coupling with the mid ring electric machinery structure 22, and the type of the electric machinery between the mid ring electric machinery structure 22 and the inner ring electric machinery structure 21 is selected upon its EME property thus to constitute a coaxial 3-ring type electric machinery provided with the PM magnetic pole sandwiched by the permeable polar face and the magnetic circuit from the individual magnetic pole.

Fig. 13 is a schematic view showing a structure of the present invention applied in a coaxial, 3-ring type electric machinery structure, wherein a PM magnetic pole sandwiched by a permeable polar face and a magnetic circuit from an individual magnetic pole is disposed on an EME coupling aspect of a mid ring electric machinery structure in a direction facing the outer ring electric machinery structure to respectively execute EME coupling with an outer and an inner ring electric machinery structures.

As illustrated in Fig. 13, in a coaxial 3-ring type electric machinery structure, the PM magnetic pole 103 sandwiched by a permeable polar face 111 and a magnetic circuit 102 from an individual magnetic pole to execute EME interaction with the mid ring electric machinery structure 22 is disposed on an EME coupling aspect of the mid ring electric machinery structure 22 in a direction facing the outer ring electric machinery structure 23 for executing EME coupling with the outer ring electric machinery structure 23, and the type of the electric machinery between the mid ring electric machinery structure 22 and the inner ring electric machinery structure 21 is selected upon its EME property thus to constitute a coaxial 3-ring type electric machinery provided with the PM magnetic pole sandwiched by the permeable polar face and the magnetic circuit from the individual magnetic pole.

Fig. 14 is a schematic view showing a structure of the present invention applied in a coaxial 3-ring type electric machinery structure, wherein a PM magnetic pole sandwiched by a permeable polar face and a magnetic circuit from an individual magnetic pole is disposed on an EME coupling aspect of a mid ring electric machinery structure in a direction facing an inner ring electric machinery structure to execute EME coupling with an inner ring electric machinery structure.

As illustrated in Fig. 14 for a coaxial 3-ring type electric machinery structure, the PM magnetic pole 103 sandwiched by a permeable polar face 111 and a magnetic circuit 102 from an individual magnetic pole to execute EME interaction with the inner ring electric machinery structure 21 is disposed on an EME coupling aspect of the mid ring electric machinery structure 22 in a direction facing the inner ring electric machinery structure 21 to execute EME coupling with the inner ring electric machinery structure 21, and the type of the electric machinery between the mid ring electric machinery structure 22 and the outer ring electric machinery structure 23 is selected upon its EME property thus to constitute a coaxial 3-ring type electric machinery provided with a PM magnetic pole sandwiched by a permeable polar face and a magnetic circuit from an individual magnetic pole.

Fig. 15 is a schematic view showing a structure of the present invention applied in a coaxial 3-ring type electric machinery structure, wherein a PM magnetic pole sandwiched by a permeable polar face and a magnetic circuit from an individual magnetic pole is disposed on an EME coupling aspect of an inner ring electric machinery structure in a direction facing the mid ring electric machinery structure to execute EME coupling with a mid ring electric machinery structure.

As illustrated in Fig. 15 for a coaxial 3-ring type electric machinery structure, the PM magnetic pole 103 sandwiched by the permeable polar face 111 and the magnetic circuit 102 from the individual magnetic pole to execute EME interaction with the mid ring electric machinery structure 22 is disposed on an EME coupling aspect of the inner ring electric machinery structure 21 in a direction facing the mid ring electric machinery structure 22 for executing EME coupling with the mid ring electric machinery structure 22, and the type of the electric machinery between the mid ring electric machinery structure 22 and the outer ring electric machinery structure 23 is selected upon its EME property thus to constitute a coaxial 3-ring type electric machinery provided with the PM magnetic pole sandwiched by the permeable polar face and the magnetic circuit from the individual magnetic pole.

Fig. 16 is a schematic view showing a structure of the present invention applied in a coaxial 3-ring type electric machinery structure, wherein two PM magnetic poles with each being sandwiched by a permeable polar face and a magnetic circuit from an individual magnetic pole are respectively disposed on an EME coupling aspect of an inner ring electric machinery structure to execute EME coupling with a mid ring electric machinery structure and on an EME coupling aspect of the mid ring electric machinery structure to execute EME coupling with an outer ring electric machinery structure.

As illustrated in Fig. 16 for a coaxial 3-ring type electric machinery structure, both of an EME coupling aspect of the inner ring electric machinery structure 21 in a direction facing the mid ring electric machinery structure 22 to execute EME coupling with the mid ring electric machinery structure 22 and an EME coupling aspect of the mid ring electric machinery structure 22 in a direction facing the outer ring electric machinery structure 23 to execute EME coupling with the outer ring electric machinery structure 23 are respectively provided with a PM magnetic pole 103 sandwiched by the permeable polar face 111 and the magnetic circuit 102 from the individual magnetic pole to constitute a coaxial 3-ring type electric machinery provided with the PM magnetic pole sandwiched by the permeable polar face and the magnetic circuit from the individual magnetic pole.

Fig. 17 is a schematic view showing a structure of the present invention applied in a coaxial 3-ring type electric machinery structure, wherein two PM magnetic poles with each being sandwiched by a permeable polar face and a magnetic circuit from an individual magnetic pole are respectively disposed on an EME coupling aspect of an outer ring electric machinery structure to execute EME coupling with a mid ring electric machinery structure and on an EME coupling aspect of the mid ring electric machinery structure to execute EME coupling with an inner ring electric machinery structure.

As illustrated in Fig. 17 for a coaxial 3-ring type electric machinery structure, both of an EME coupling aspect of the outer ring electric machinery structure 23 in a direction facing the mid ring electric machinery structure 22 to execute EME coupling with the mid ring electric machinery structure 22 and an EME coupling aspect of the mid ring electric machinery structure 22 in a direction facing the inner ring electric machinery structure 21 to execute EME coupling with the inner ring electric machinery structure 21 are respectively provided with a PM magnetic pole 103 sandwiched by the permeable polar face 111 and the magnetic circuit 102 from the individual magnetic pole to constitute a coaxial 3-ring type electric machinery provided with the PM magnetic pole sandwiched by the permeable polar face and the magnetic circuit from the individual magnetic pole.

Fig. 18 is a schematic view showing a structure of the present invention applied in a coaxial 3-ring type electric machinery structure, wherein two PM magnetic poles with each being sandwiched by a permeable polar face and a magnetic circuit from an individual magnetic pole are respectively disposed on an EME coupling aspect of an outer ring electric machinery structure in a direction facing a mid ring electric machinery structure and on an EME coupling aspect of an inner ring electric machinery structure in a direction facing a mid ring electric machinery structure.

As illustrated in Fig. 18 for a coaxial 3-ring type electric machinery structure, both of the EME coupling aspect of the outer ring electric machinery structure 23 in a direction facing the mid ring electric machinery structure 22 to execute EME coupling with the mid ring electric machinery structure 22 and the EME coupling aspect of the inner ring electric machinery structure 21 in a direction facing the mid ring electric machinery structure 22 to execute EME coupling with the mid ring electric machinery structure 22 are respectively disposed with the PM magnetic pole 103 sandwiched by the permeable polar face 111 and the magnetic circuit 102 from the individual magnetic pole for jointly constituting with the mid ring electric machinery structure 22 a coaxial 3-ring type electric machinery provided with the PM magnetic pole sandwiched by the permeable polar face and the magnetic circuit from the individual magnetic pole.

Fig. 19 is a schematic view showing a structure of the present invention applied in a coaxial 3-ring type electric machinery structure, wherein two PM magnetic poles each sandwiched by a permeable polar face and a magnetic circuit from an individual magnetic pole are respectively disposed on an EME coupling aspect of a mid ring electric machinery structure to execute EME coupling with an outer ring electric machinery structure and an inner ring electric machinery structure in a direction facing the outer ring electric machinery structure and in another direction facing the inner ring electric machinery structure.

As illustrated in Fig. 19 for a coaxial 3-ring type electric machinery structure, two PM magnetic poles 103 each being sandwiched by the permeable polar face 111 and the magnetic circuit 102 from the individual magnetic pole for executing EME interaction with both the inner electric machinery structure 21 and the outer ring electric machinery structure 23 are respectively disposed on two EME coupling aspects of the mid ring electric machinery structure 22 in both directions respectively facing the outer ring electric machinery structure 23 and the inner ring electric machinery structure 21 to jointly constitute a coaxial 3-ring type electric machinery provided with the PM magnetic pole sandwiched by the permeable polar face and the magnetic circuit from the individual magnetic pole.

Fig. 20 is a schematic view showing a structure of the present invention applied in a coaxial 3-ring type electric machinery structure wherein a PM magnetic pole to execute coupling with an inner ring electric machinery structure and an outer ring electric machinery structure on both sides is disposed on a mid ring electric machinery structure for executing EME coupling with an inner ring electric machinery structure and an outer ring electric machinery structure to constitute a magnetic pole and two permeable magnetic faces are each disposed on both polar faces on both ends of the PM magnetic pole.

As illustrated in Fig. 20 for a coaxial 3-ring type electric machinery structure, the PM magnetic pole 103 to constitute magnetic pole is disposed on the mid ring electric machinery structure 22 for respectively executing EME coupling with the inner ring electric machinery structure 21 and the outer ring electric machinery structure 23 provided on both sides of the mid ring electric machinery structure 22; and both polar faces at both ends of the PM magnetic pole 103 are each disposed with a permeable polar face 111, and through permeable polar face 111 the magnetic poles at both ends of the PM magnetic pole respectively execute coupling with the inner ring electric machinery structure 21 and the outer ring electric machinery structure 23 on both sides to execute EME interaction, thus to constitute a coaxial 3-ring type electric machinery provided with two permeable polar faces each disposed on two polar faces on both ends of the PM magnetic pole.

Fig. 21 is a schematic view showing a structure of the present invention applied in a double layer type plate electric machinery structure wherein a PM magnetic pole sandwiched by a permeable polar face and a magnetic circuit from an individual magnetic pole is disposed on an EME coupling aspect of an inner layer plate electric machinery structure in a direction facing an outer layer plate electric machinery structure.

As illustrated in Fig. 21 for a double layer type plate electric machinery structure, the PM magnetic pole 103 sandwiched by the permeable polar face 111 and the magnetic circuit 102 from the individual magnetic pole is disposed on an EME coupling aspect of the inner layer plate electric machinery structure 31 in a direction facing the outer layer plate electric machinery structure 32 to execute EME interaction with the outer layer plate electric machinery structure 32; or the PM magnetic pole 103 sandwiched by the permeable polar face 111 and the magnetic circuit 102 from the individual magnetic pole is disposed on an EME coupling aspect of an outer layer plate electric machinery structure 32 in a direction facing an inner layer plate electric machinery structure 31 to execute EME interaction with the inner layer plate electric machinery structure, thus to constitute a double layer type plate electric machinery provided with the PM magnetic pole sandwiched by the permeable polar face and the magnetic circuit from the individual magnetic pole.

Fig. 22 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of an inner layer plate electric machinery structure in a direction facing a mid layer plate electric machinery structure.

As illustrated in Fig. 22 for a coaxial 3-layer type plate electric machinery structure, the PM magnetic pole 103 sandwiched by the permeable polar face 111 and the magnetic circuit 102 from the individual magnetic pole to execute EME interaction with a mid layer plate electric machinery structure 42 is disposed on an EME coupling aspect of an inner layer plate electric machinery structure 41 in a direction facing a mid layer plate electric machinery structure 42, and the type of the electric machinery structure between a mid layer plate electric machinery structure 42 and an outer layer plate electric machinery structure 43 is selected upon its EME property thus to constitute a 3-layer type plate electric machinery provided with the PM magnetic pole sandwiched by the permeable polar face and the magnetic circuit from the individual magnetic pole.

Fig. 23 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of a mid layer plate electric machinery structure in a direction facing an inner layer plate electric machinery structure.

As illustrated in Fig. 23 for a coaxial 3-layer type plate electric machinery structure, the PM magnetic pole 103 sandwiched by the permeable polar face 111 and the magnetic circuit 102 from the individual magnetic pole to execute EME interaction with an inner layer plate electric machinery structure 41 is disposed on an EME coupling aspect of a mid layer plate electric machinery structure 42 in a direction facing an inner layer plate electric machinery structure 41, and the type of the electric machinery structure between a mid layer plate electric machinery structure 42 and an outer layer plate electric machinery structure 43 is selected upon its EME property thus to constitute a 3-layer type plate electric machinery provided with the PM magnetic pole sandwiched by the permeable polar face and the magnetic circuit from the individual magnetic pole.

Fig. 24 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of an outer layer plate electric machinery structure in a direction facing a mid layer plate electric machinery structure.

As illustrated in Fig. 24 for a coaxial 3-layer type plate electric machinery structure, the PM magnetic pole 103 sandwiched by the permeable polar face 111 and the magnetic circuit 102 from the individual magnetic pole to execute EME interaction with a mid layer plate electric machinery structure 42 is disposed on an EME coupling aspect of an outer layer plate electric machinery structure 43 in a direction facing a mid layer plate electric machinery structure 42, and the type of the electric machinery structure between a mid layer plate electric machinery structure 42 and an inner layer plate electric machinery structure 41 is selected upon its EME property thus to constitute a 3-layer type plate electric machinery provided with the PM magnetic pole sandwiched by the permeable polar face and the magnetic circuit from the individual magnetic pole.

Fig. 25 is a schematic view showing a structure of the present invention applied in a coaxial 3-layer type plate electric machinery structure wherein a PM magnetic pole sandwiched by a permeable polar face and a magnetic circuit from an individual magnetic pole is disposed on an EME coupling aspect of a mid layer plate electric machinery structure in a direction facing an outer layer plate electric machinery structure.

As illustrated in Fig. 25 for a coaxial 3-layer type plate electric machinery structure, the PM magnetic pole 103 sandwiched by the permeable polar face 111 and the magnetic circuit 102 from the individual magnetic pole to execute EME interaction with an outer layer plate electric machinery structure 43 is disposed on an EME coupling aspect of a mid layer plate electric machinery structure 42 in a direction facing an outer layer plate electric machinery structure 43, and the type of the electric machinery structure between a mid layer plate electric machinery structure 42 and an inner layer plate electric machinery structure 41 is selected upon its EME property thus to constitute a 3-layer type plate electric machinery provided with the PM magnetic pole sandwiched by the permeable polar face and the magnetic circuit from the individual magnetic pole.

Fig. 26 is a schematic view showing a structure of the present invention applied in a coaxial 3-layer type plate electric machinery structure wherein two PM magnetic poles with each being sandwiched by a permeable polar face and a magnetic circuit from an individual magnetic pole are respectively disposed on an EME coupling aspect of an inner layer plate electric machinery structure in a direction facing a mid layer plate electric machinery structure, and on an EME coupling aspect of a mid layer plate electric machinery structure in a direction facing an outer layer plate electric machinery structure.

As illustrated in Fig. 26 for a coaxial 3-layer type plate electric machinery structure, both of an EME coupling aspect of an inner layer plate electric machinery structure 41 in a direction facing the mid layer plate electric machinery structure 42, and an EME coupling aspect of the mid layer plate electric machinery structure 42 in a direction facing the outer layer plate electric machinery structure 43 are respectively disposed with the PM magnetic pole 103 sandwiched by the permeable polar face 111 and the magnetic circuit 102 from the individual magnetic pole for jointly constituting with the outer layer plate electric machinery structure 43 a 3-layer type plate electric machinery provided with the PM magnetic pole sandwiched by the permeable polar face and the magnetic circuit from the individual magnetic pole.

Fig. 27 is a schematic view showing a structure of the present invention applied in a coaxial 3-layer type plate electric machinery structure wherein two PM magnetic poles with each being sandwiched by a permeable polar face and a magnetic circuit from an individual magnetic pole are respectively disposed on an EME coupling aspect of an outer layer plate electric machinery structure in a direction facing a mid layer plate electric machinery structure, and on an EME coupling aspect of a mid layer plate electric machinery structure in a direction facing an inner layer plate electric machinery structure.

As illustrated in Fig. 27 for a coaxial 3-layer type plate electric machinery structure, both of the EME coupling aspect of the outer layer plate electric machinery structure 43 in a direction facing the mid layer plate electric machinery structure 42 and the EME coupling aspect of the mid layer plate electric machinery structure 42 in a direction facing the inner layer plate electric machinery structure 41 are respectively disposed with the PM magnetic pole 103 sandwiched by the permeable polar face 111 and the magnetic circuit 102 from the individual magnetic pole for constituting a coaxial 3-layer type plate electric machinery provided with the PM magnetic pole sandwiched by the permeable polar face and the magnetic circuit from the individual magnetic pole.

Fig. 28 is a schematic view showing a structure of the present invention applied in a coaxial 3-layer type plate electric machinery structure wherein two PM magnetic poles with each being sandwiched by a permeable polar face and a magnetic circuit from an individual magnetic pole are respectively disposed on an EME coupling aspect of an inner layer plate electric machinery structure, and on an EME coupling aspect of an outer layer plate electric machinery structure to respectively execute EME coupling with a mid layer plate electric machinery structure.

As illustrated in Fig. 28 for a coaxial 3-layer type plate electric machinery structure, both of an EME coupling aspect of the inner layer plate electric machinery structure 41 in a direction facing a mid layer plate electric machinery structure 42 and an EME coupling aspect of the outer layer plate electric machinery structure 43 in a direction facing a mid layer plate electric machinery structure 42 are each disposed with the PM magnetic pole 103 sandwiched by the permeable polar face 111 and the magnetic circuit 102 from the individual magnetic pole to execute EME interaction with the mid layer electric machinery structure 42 thus to constitute a coaxial 3-layer type plate electric machinery provided with the PM magnetic pole sandwiched by the permeable polar face and the magnetic circuit from the individual magnetic pole.

Fig. 29 is a schematic view showing a structure of the present invention applied in a coaxial 3-layer type plate electric machinery structure wherein two PM magnetic poles each being sandwiched by a permeable polar face and a magnetic circuit from an individual magnetic pole are respectively disposed on both sides of a mid layer plate electric machinery structure to execute EME coupling with an inner layer plate electric machinery structure and an outer layer plate electric machinery structure disposed on both sides of the present invention.

As illustrated in Fig. 29 for a coaxial 3-layer type plate electric machinery structure, two EME coupling aspects on both sides of the mid layer plate electric machinery structure 42 in a direction facing an inner layer plate electric machinery structure 41 and in another direction facing an outer layer plate electric machinery structure 43 provided on both sides of the mid layer plate electric machinery structure 42 are respectively disposed with the PM magnetic pole 103 sandwiched by the permeable polar face 111 and the magnetic circuit 102 from the individual magnetic pole for executing EME interaction with the inner layer plate electric machinery structure 41 and the outer layer plate electric machinery structure 43 thus to constitute a coaxial 3-layer type plate electric machinery provided with the PM magnetic pole sandwiched by the permeable polar face and the magnetic circuit from the individual magnetic pole.

Fig. 30 is a schematic view showing a structure of the present invention applied in a coaxial 3-layer type plate electric machinery structure wherein a mid layer plate electric machinery structure to execute EME coupling with an inner layer plate electric machinery structure and an outer layer plate electric machinery structure on both sides of the present invention is disposed with a PM magnetic pole to constitute a magnetic pole and two permeable magnetic faces are each disposed on both polar faces on both ends of the PM magnetic pole.

As illustrated in Fig. 30 for a coaxial 3-layer type plate electric machinery structure, the PM magnetic pole 103 to constitute magnetic pole is disposed on the mid layer plate electric machinery structure 42 for respectively executing EME coupling with the inner layer plate electric machinery structure 41 and the outer layer plate electric machinery structure 43 provided on both sides of the mid layer plate electric machinery structure 42; two permeable polar faces 111 are each disposed on both polar faces at both ends of the PM magnetic pole 103, and through permeable polar face 111 the magnetic poles at both ends of the PM magnetic pole respectively execute coupling with the inner layer plate electric machinery structure 41 and the outer layer plate electric machinery structure 43 on both sides to execute EME interaction, thus to constitute a coaxial 3-layer type plate electric machinery provided with two permeable polar faces each disposed on two polar faces on both ends of the PM magnetic pole.

Fig. 31 is a schematic view showing a structure of the present invention applied in a double layer type linear electric machinery structure wherein the double linear electric machinery has disposed on an EME coupling aspect of an inner layer linear electric machinery structure a PM magnetic pole sandwiched by a permeable polar face and a magnetic circuit from an individual magnetic pole.

As illustrated in Fig. 31 for a double layer type linear electric machinery structure, the PM magnetic pole 103 sandwiched by the permeable polar face 111 and the magnetic circuit 102 from the individual magnetic pole is disposed on an EME coupling aspect of the inner layer linear electric machinery structure 51 in a direction facing an outer layer linear electric machinery structure 52 to execute EME interaction with the outer layer linear electric machinery structure 52; or the PM magnetic pole 103 sandwiched by the permeable polar face 111 and the magnetic circuit 102 from the individual magnetic pole is disposed on an EME coupling aspect of the outer layer linear electric machinery structure 53 in a direction facing an inner layer linear electric machinery structure 51 to execute EME interaction with the inner layer linear electric machinery structure 51 thus to constitute a double layer type electric machinery provided with the PM magnetic pole sandwiched by the permeable polar face and the magnetic circuit from the individual magnetic pole.

Fig. 32 is a schematic view showing a structure of the present invention applied in a 3-layer type linear electric machinery structure wherein a PM magnetic pole sandwiched by a permeable polar face and a magnetic circuit from an individual magnetic pole is disposed on an outer layer linear electric machinery structure to execute EME coupling with a mid layer linear electric machinery structure.

As illustrated in Fig. 32 for a 3-layer type linear electric machinery structure, the PM magnetic pole 103 sandwiched by the permeable polar face 111 and the magnetic circuit 102 from the individual magnetic pole to execute EME interaction with a mid layer linear electric machinery structure 62 is disposed on an EME coupling aspect of an outer layer linear electric machinery structure 61 in a direction facing a mid layer linear electric machinery structure 62, and the type of the electric machinery structure between a mid layer linear electric machinery structure 62 and an inner layer linear electric machinery structure 61 is selected upon its EME property thus to constitute a 3-layer type linear electric machinery provided with the PM magnetic pole sandwiched by the permeable polar face and the magnetic circuit from the individual magnetic pole.

Fig. 33 is a schematic view showing a structure of the present invention applied in a 3-layer type linear electric machinery structure wherein a PM magnetic pole sandwiched by a permeable polar face and a magnetic circuit from an individual magnetic pole is disposed on an EME coupling aspect of a mid layer linear electric machinery structure in a direction facing an outer layer linear electric machinery structure.

As illustrated in Fig. 33 for a 3-layer type linear electric machinery structure, the PM magnetic pole 103 sandwiched by the permeable polar face 111 and the magnetic circuit 102 from the individual magnetic pole to execute EME interaction with an outer layer linear electric machinery structure 63 is disposed on an EME coupling aspect of a mid layer linear electric machinery structure 62 in a direction facing an outer layer linear electric machinery structure 63, and the type of the electric machinery structure between a mid layer linear electric machinery structure 62 and an inner layer linear electric machinery structure 61 is selected upon its EME property thus to constitute a 3-layer type linear electric machinery provided with the PM magnetic pole sandwiched by the permeable polar face and the magnetic circuit from the individual magnetic pole.

Fig. 34 is a schematic view showing a structure of the present invention applied in a 3-layer type linear electric machinery structure wherein a PM magnetic pole sandwiched by a permeable polar face and a magnetic circuit from an individual magnetic pole is disposed on an EME coupling aspect of an inner layer linear electric machinery structure in a direction facing a mid layer linear electric machinery structure.

As illustrated in Fig. 34 for a 3-layer type linear electric machinery structure, the PM magnetic pole 103 sandwiched by the permeable polar face 111 and the magnetic circuit 102 from the individual magnetic pole to execute EME interaction with a mid layer linear electric machinery structure 62 is disposed on an EME coupling aspect of an inner layer linear electric machinery structure 61 in a direction facing a mid layer linear electric machinery structure 62, and the type of the electric machinery structure between a mid layer linear electric machinery structure 62 and an outer layer linear electric machinery structure 63 is selected upon its EME property thus to constitute a 3-layer type linear electric machinery provided with the PM magnetic pole sandwiched by the permeable polar face and the magnetic circuit from the individual magnetic pole.

Fig. 35 is a schematic view showing a structure of the present invention applied in a 3-layer type linear electric machinery structure wherein a PM magnetic pole sandwiched by a permeable polar face and a magnetic circuit from an individual magnetic pole is disposed to an EME coupling aspect of a mid layer linear electric machinery structure in a direction facing an inner layer linear electric machinery structure.

As illustrated in Fig. 35 for a 3-layer type linear electric machinery structure, the PM magnetic pole 103 sandwiched by the permeable polar face 111 and the magnetic circuit 102 from the individual magnetic pole to execute EME interaction with an inner layer linear electric machinery structure 61 is disposed on an EME coupling aspect of a mid layer linear electric machinery structure 62 in a direction facing an inner layer linear electric machinery structure 61, and the type of the electric machinery structure between a mid layer linear electric machinery structure 62 and an outer layer linear electric machinery structure 63 is selected upon its EME property thus to constitute a 3-layer type linear electric machinery provided with the PM magnetic pole sandwiched by the permeable polar face and the magnetic circuit from the individual magnetic pole.

Fig. 36 is a schematic view showing a structure of the present invention applied in a 3-layer linear type electric machinery structure wherein two PM magnetic poles each being sandwiched by a permeable polar face and a magnetic circuit from an individual magnetic pole are respectively disposed on an EME coupling aspect of a mid layer linear electric machinery structure to execute EME coupling with an outer layer linear electric machinery structure, and on an EME coupling aspect of an inner layer linear electric machinery structure to execute EME coupling with a mid layer linear electric machinery structure.

As illustrated in Fig. 36 for a 3-layer type linear electric machinery structure, both of an EME coupling aspect of the mid layer linear electric machinery structure 62 in a direction facing the outer layer linear electric machinery structure 63 and an EME coupling aspect of the inner layer linear electric machinery structure 61 in a direction facing the mid layer linear electric machinery structure 62 are respectively disposed with the PM magnetic pole 103 sandwiched by the permeable polar face 111 and the magnetic circuit 102 from the individual magnetic pole, thus to constitute a 3-layer type linear electric machinery provided with the PM magnetic pole sandwiched by the permeable polar face and the magnetic circuit from the individual magnetic pole.

Fig. 37 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on an EME coupling aspect of an outer layer linear electric machinery structure to execute EME coupling with a mid layer linear electric machinery structure, and on an EME coupling aspect of a mid layer linear electric machinery structure to execute EME coupling with an inner layer linear electric machinery structure.

As illustrated in Fig. 37 for a 3-layer type linear electric machinery structure, two PM magnetic poles 103 each being sandwiched by the permeable polar face 111 and the magnetic circuit 102 from the individual magnetic pole are respectively disposed on an EME coupling aspect of the outer layer linear electric machinery structure 63 in a direction facing a mid layer linear electric machinery structure 62 and an EME coupling aspect of the mid layer linear electric machinery structure 62 in a direction facing the inner layer linear electric machinery structure 61 thus to constitute a 3-layer type linear electric machinery provided with the PM magnetic pole sandwiched by the permeable polar face and the magnetic circuit from the individual magnetic pole.

Fig. 38 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on an EME coupling aspect of an outer layer linear electric machinery structure to execute EME coupling with a mid layer linear electric machinery structure, and on an EME coupling aspect of an inner layer linear electric machinery structure to execute EME coupling with a mid layer linear electric machinery structure.

As illustrated in Fig. 38 for a 3-layer type linear electric machinery structure, an EME coupling aspect of the outer layer linear electric machinery structure 63 in a direction facing the mid layer linear electric machinery structure 62 and an EME coupling aspect of the inner layer linear electric machinery structure 61 facing in a direction facing the mid layer linear electric machinery structure 62 are each disposed with the PM magnetic pole 103 sandwiched by the permeable polar face 111 and the magnetic circuit 102 from the individual magnetic pole for executing EME interaction with the mid layer linear electric machinery structure 62, thus to constitute a 3-layer type linear electric machinery provided with the PM magnetic pole sandwiched by the permeable polar face and the magnetic circuit from the individual magnetic pole.

Fig. 39 is a schematic view showing a structure of the present invention applied in a 3-layer type linear electric machinery structure wherein two PM magnetic poles each being sandwiched by a permeable polar face and a magnetic circuit from an individual magnetic pole are respectively disposed on two EME coupling aspects of both sides of a mid layer linear electric machinery structure to respectively execute EME coupling with an outer layer linear electric machinery structure and an inner layer linear electric machinery structure.

As illustrated in Fig. 39 for a 3-layer type linear electric machinery structure, two PM magnetic poles 103 each being sandwiched by the permeable polar face 111 and the magnetic circuit 102 from the individual magnetic pole are respectively disposed on two EME coupling aspects on both sides of the mid layer linear electric machinery structure 62 in a direction facing the outer layer linear electric machinery structure 63 and in another direction facing the inner layer linear electric machinery structure 61 for executing EME interaction with both the inner layer linear electric machinery structure 61 and the outer layer linear electric machinery structure 63 thus to constitute a 3-layer type linear electric machinery provided with the PM magnetic pole sandwiched by the permeable polar face and the magnetic circuit from the individual magnetic pole.

Fig. 40 is a schematic view showing a structure of the present invention applied in a 3-layer type linear electric machinery structure wherein a PM magnetic pole is disposed on a mid layer linear electric machinery structure to execute EME coupling with an outer layer linear electric machinery structure and an inner layer linear electric machinery structure, and two permeable polar faces are respectively disposed on both polar faces on both ends of the PM magnetic pole.

As illustrated in Fig. 40 for a 3-layer type linear electric machinery structure, a PM magnetic pole 103 to constitute magnetic pole is disposed on the mid layer linear electric machinery structure 62 for respectively executing EME coupling with the outer layer linear electric machinery structure 63 and the inner layer linear electric machinery structure 61 provided on both sides of the mid layer linear electric machinery structure 62; two permeable polar faces 111 are each disposed on both polar faces at both ends of the PM magnetic pole 103, and through permeable polar face 111 the magnetic poles at both ends of the PM magnetic pole respectively execute coupling with the inner layer linear electric machinery structure 61 and the outer layer linear electric machinery structure 63 on both sides to execute EME interaction, thus to constitute a 3-layer type linear electric machinery provided with two permeable solar faces each disposed on two polar faces on both ends of the PM magnetic pole.

The PM magnetic pole sandwiched by permeable polar face and magnetic circuit of the electric machinery provided with the PM magnetic pole sandwiched by permeable polar face and magnetic circuit as described in Figs. 9 through 40 includes to be disposed to the coaxial 3-ring type electric machinery structure, the coaxial 3-layer type plate electric machinery structure, the 3-layer type linear electric machinery structure, or other electric machinery structure of mid electric machinery structure from 3-piece electric machinery structure to execute EME interaction, wherein
the mid electric machinery structure for disposing the PM magnetic pole 103 serves as the static portion of the electric machinery or the mobile portion of the electric machinery.

Quantity of the magnetic pole disposed on the EME coupling aspect of each electric machinery structure for all those preferred embodiments described in Figs. 9 through 40 may be selected to be the same or different as applicable.

In practical application, operation types of two electric machinery components interacting with each other by means of EME of the electric machinery disposed with a PM magnetic pole sandwiched by a permeable polar face and a magnetic circuit in case of the cylinder electric machinery (as illustrated in Figs. 10 and 11) or the double layer type plate electric machinery (as illustrated in Fig. 21), or the double layer type linear electric machinery (as illustrated in Fig. 31) for producing function of a generator, a motor, an EME vortex coupling transmission, or EME vortex braking function include:
1. Either electric machinery structural component serves as a static portion of the electric machinery while another electric machinery structural component serves as a mobile portion of the electric machinery; or
2. Both electric machinery structural components function as the mobile portions of the electric machinery.

In practical application, the electric machinery provided with a PM magnetic pole sandwiched by a permeable polar face and a magnetic circuit from an individual magnetic pole, e.g., the coaxial 3-ring type electric machinery (as illustrated in Figs. 12 through 20), the coaxial 3-layer type plate electric machinery (as illustrated in Figs. 22 through 30), or the 3-layer type linear electric machinery (as illustrated in Figs. 32 through 40), or other electric machinery structure comprised of 3-piece electric machinery structure to execute EME interaction, or those three interacting electric machinery structural components for producing function of a generator, a motor, an EME vortex coupling transmission, or EME vortex braking function provide the following composition functions:
1. One EM structural component serves as a static portion of the electric machinery while the other two EM structural components function as two mobile portions of the electric machinery; or
2. Two EM structural components serve as two static portions of the electric machinery while the third EM structural component serves as a mobile portion of the electric machinery; or
3. All three EM structural components each serves as a mobile portion of the electric machinery.

In the electric machinery provided with a PM magnetic pole sandwiched by a permeable polar face and a magnetic circuit from an individual magnetic pole as described in those preferred embodiments illustrated in Figs. 2 through 33, selection and layout of electric machinery structure and windings for the electric machinery structural component of the PM magnetic pole sandwiched by the permeable polar face and a magnetic circuit from the individual magnetic pole and other electric machinery structural components executing EME coupling interaction are determined according to the property of the assembly of the entire electric machinery, nature of the power inputted, control function, control mode, and output performance requirements.

According to the selection of its EME interaction property, the electric machinery provided with a PM magnetic pole sandwiched by a permeable polar face and a magnetic circuit to constitute the assembly of the electric machinery includes those for operating in DC or AC revolution or linear electric machinery are comprised of commutator brush, brushless, ring-brush, synchronous, asynchronous, internal revolving, external revolving, mid electric machinery structure revolving, double-acting, multi-layer, multi-ring, linear, DC brushless, or inverter electric machinery, or an electric machinery functioning as a generator or as a motor or as both a generator and a motor, coupling transmission device, as an EME vortex coupling transmission device, or an EME vortex braking device.

Accordingly, the electric machinery provided with a PM magnetic pole sandwiched by a permeable polar face and a magnetic circuit from an individual magnetic pole of the present invention by having disposed the PM magnetic pole sandwiched between the permeable polar face and the magnetic circuit from the individual magnetic pole is characterized in that it prevents PM magnetic pole from falling off and avoids its magnetic force of the PM magnetic pole from being weakened by inverse excitation during the operation when compared to the conventional electric machinery having adhered a PM magnetic pole to a polar face.

In one embodiment a linearly coupled 3-layer type linear electric machine comprises inner layer, mid layer, and outer layer linear electric machine structures, including an inner layer linear electric machine structure (61), a mid layer linear electric machine structure (62), and an outer layer linear electric machine structure (63) and is characterised in that:
(1) an EME coupling aspect of the mid layer linear electric machine structure (62) in a direction facing the outer layer linear electric machine structure (63) and an EME coupling aspect of the inner layer linear electric machine structure (61) in a direction facing the mid layer linear electric machine structure (62); or
(2) an EME coupling aspect of the outer layer linear electric machine structure (63) in a direction facing the mid layer linear electric machine structure (62) and an EME coupling aspect of the mid layer linear electric machine structure (62) in a direction facing the inner layer linear electric machine structure (61); or
(3) an EME coupling aspect of the inner layer linear electric machine structure (61) in a direction facing the mid layer linear electric machine structure (62) and an EME coupling aspect of the outer layer linear electric machine structure (63) in a direction facing the mid layer linear electric machine structure (62); or
(4) two EME coupling aspects on both sides of the mid layer linear electric machine structure (62) in a direction facing the inner layer linear electric machine structure (61) and in another direction facing the outer layer linear electric machine structure (63);
   the EME coupling aspects of items (1), (2), (3) and (4) are disposed with a PM magnetic pole (103) sandwiched by the permeable polar face (111) and the magnetic circuit (102) associated with the individual magnetic pole, thereby to constitute a 3-layer linear electric machine provided with a PM magnetic pole (103) being sandwiched by the permeable polar face (111) and the magnetic circuit 102 associated with the individual magnetic pole.

In another embodiment, a linearly coupled 3-layer type linear electric machine comprises inner layer, mid layer, and outer layer linear electric machine structures including an inner layer linear electric machine structure (61), a mid layer linear electric machine structure (62), and an outer layer linear electric machine structure (63), and wherein the mid layer linear electric machine structure (62) for executing EME coupling with the inner layer linear electric machine structure (61) and the outer layer linear electric machine structure (63) on both sides is disposed with a PM magnetic pole (103), both polar faces at both ends of the PM magnetic pole (103) are each disposed with a permeable polar face 111, and through the permeable polar face (111) the magnetic poles at both ends of the PM magnetic pole respectively execute coupling with the inner layer linear electric machine structure (61), and the outer layer linear electric machine structure (63) on both sides executes EME interaction, thereby to constitute a 3-layer type linear electric machine provided with two permeable polar faces each disposed on two polar faces on both ends of the PM magnetic pole.

In another embodiment the permeable polar face (111) and a magnetic circuit as claimed in Claim 1, wherein the permeable polar face and the sandwiched PM magnetic pole are disposed to form a coaxial 3-ring electric machine structure, a coaxial 3-layer plate electric machine structure, a 3-layer linear electric machine structure, or other electric machine structure of mid electric machine structure from a 3-piece electric machine structure to execute EME interaction, and wherein
the mid electric machine structure for disposing the PM magnetic pole (103) serves as the static portion of the electric machine or the mobile portion of the electric machine.

In another embodiment, the operation types of two electric machine components interacting with each other by means of EME of the electric machine disposed with a PM magnetic pole sandwiched by a permeable polar face and a magnetic circuit in the case of a cylindrical electric machine, or the double layer plate electric machine, or the double layer linear electric machine for producing the function of a generator, a motor, both a generator and a motor, an EME vortex coupling transmission, or a EME vortex braking function include:
(1) either an electric machine structural component serving as a static portion of the electric machine while another electric machine structural component serves as a mobile portion of the electric machine; or
(2) both electric machine structural components function as the mobile portions of the electric machinery.

In another embodiment, the coaxial 3-ring type electric machine, the coaxial 3-layer plate electric machine, the 3-layer linear electric machine, or other electric machine structure of mid electric machine structure from a 3-piece electric machine structure to execute EME interaction provided with three electric machinery components interacting by EME for producing the function of a generator, a motor, both a generator and a motor, an EME vortex coupling transmission, or EME vortex braking function provide the following functions:
(1) one EM structural component serves as a static portion of the electric machine, while the other two EM structural components function as two mobile portions of the electric machine; or
(2) two EM structural components serve as two static portions of the electric machine, while the third EM structural component serves as a mobile portion of the electric machine;
   or
(3) all three EM structural components each serves as a mobile portion of the electric machine.

In another embodiment, selection and layout of electric machine structure and windings for the electric machine structural component of the PM magnetic pole sandwiched between the permeable polar face and the magnetic circuit associated with the individual magnetic pole and other electric machine structural components executing EME coupling interaction are determined according to the property of the assembly of the entire electric machine, the nature of the power inputted, the control function, the control mode, and the output performance requirements.

In another embodiment, according to the selection of its EME interaction property, the electric machine provided with a PM magnetic pole sandwiched between a permeable polar face and a magnetic circuit to constitute the assembly of the electric machine includes those for operating in DC or AC revolution, or linear electric machine comprised of commutator brush, brushless, ring-brush, synchronous, asynchronous, internal revolving, external revolving, mid electric machinery structure revolving, double-acting, multi-layer, multi-ring, linear, DC brushless, or inverter electric machine, or an electric machine functioning as a generator or as a motor or as both a generator and a motor, a coupling transmission device, as an EME vortex coupling transmission device, or an EME vortex braking device.

## Claims

1. An electric machinery provided with a PM magnetic pole sandwiched by a permeable polar face and a magnetic circuit is **characterized** as a PM magnetic pole sandwiched by permeable polar face and magnetic circuit from an individual magnetic pole disposed in various types of electric machinery of the prior art; and is arranged in that that polarities of two PM magnetic poles 103 each being sandwiched by a permeable polar face 111 and a magnetic circuit 102 of abutted individual magnetic poles are identical with each other ; or
the polarities two PM magnetic poles 103 each being sandwiched by a permeable polar face 111 and a magnetic circuit 102 of abutted individual magnetic poles are opposite to each other.

2. The electric machinery provided with a PM magnetic pole sandwiched by a permeable polar face and a magnetic circuit as claimed in Claim 1, wherein the permeable polar face 111 is disposed on the individual magnetic pole to sandwich the PM magnetic pole 103 jointly with the magnetic circuit 102 to constitute magnetic pole; the magnetic circuit 102 and the permeable polar face 111 are comprised of a material of silicon steel, steel, or iron providing good permeability and made in an integral part or a stack of multiple sheets by lamination, or made by metallurgy from the dust of permeable material; a polar face of the permeable polar face 111 faces a structure of another electric machinery that interacts with the permeable polar face 111 to execute EME; and the polar face of the permeable polar face 111 may be selected to indicate a convex, concave or flat surface or may be further disposed with a groove to indicate protrusion and indention pattern or a specific geometric form as applicable.

3. The electric machinery provided with a PM magnetic pole sandwiched by a permeable polar face and a magnetic circuit as claimed in Claim 1, wherein the individual magnetic pole can be further constituted by using the neck portion of the magnetic circuit of magnetic pole 104 and the permeable polar face 111 to sandwich a PM magnetic pole 103; the magnetic circuit 102, the neck portion of the magnetic circuit of magnetic pole 104, and the permeable polar face 111 are comprised of a material of silicon steel, steel, or iron providing good permeability and made in an integral part or a stack of multiple sheets by lamination, or made by metallurgy from the dust of permeable material; a polar face of the permeable polar face 111 faces a structure of another electric machinery that interacts with the permeable polar face 111 to execute EME; and the polar face of the permeable polar face 111 may be selected to indicate a convex, concave, or flat surface, or may be further disposed with a groove to indicate protrusion and indention pattern or a specific geometric form as applicable.

4. The electric machinery provided with a PM magnetic pole sandwiched by a permeable polar face and a magnetic circuit as claimed in Claim 1, wherein ways of having the PM magnetic pole 103 by the permeable polar face 111 and the magnetic circuit 102 from an individual magnetic pole in the electric machinery include having a mechanical locking member to clamp or secure, a screw and a nut structure to lock up, a rivet to secure, a pin and a pinhole structure to fix, or a packing means in proper size and selected geometric form to insert, a magnetic circuit structure to clamp, a casing to clamp, a dedicated structural member to clamp, an adhesion to bind the PM magnetic polar 103, or having any other means of the prior art to secure the PM magnetic pole 103.

5. The electric machinery provided with a PM magnetic pole sandwiched by a permeable polar face and a magnetic circuit as claimed in Claim 1, wherein the electric machinery is related to a cylinder electric machinery in a construction comprised of an inner layer electric machinery structure and an outer layer electric machinery, including an inner layer electric machinery structure 11 and an outer layer electric machinery structure 12 and is **characterized** as:
(1) an EME coupling aspect of the outer layer electric machinery structure 12 in a direction facing the inner layer electric machinery structure 11 to execute EME coupling with the inner layer electric machinery structure 11; or
(2) an EME coupling aspect of the inner layer electric machinery structure 11 in a direction facing the outer layer electric machinery structure 12 to execute EME coupling with the outer layer electric machinery structure 12;
the EME coupling aspects of above item (1) and (2) are disposed with an PM magnetic pole 103 sandwiched by the permeable polar face 111 and the magnetic circuit 102 from the individual magnetic pole, thus to constitute a cylinder electric machinery provided with a PM magnetic pole 103 being sandwiched by the permeable polar face 111 and the magnetic circuit 102 from the individual magnetic pole.

6. The electric machinery provided with a PM magnetic pole sandwiched by a permeable polar face and a magnetic circuit as claimed in Claim 1, wherein the electric machinery is related to a coaxial 3-ring type electric machinery to engage coaxial operation by insertion of an inner ring, a mid ring, and an outer ring electric machinery structures including an inner ring electric machinery structure 21, a mid ring electric machinery structure 22, and an outer ring electric machinery structure 23 and is **characterized** as:
(1) an EME coupling aspect of the outer ring electric machinery structure 23 in a direction facing the mid ring electric machinery structure 22 to execute EME coupling with the mid ring electric machinery structure 22; or
(2) an EME coupling aspect of the mid ring electric machinery structure 22 in a direction facing the outer ring electric machinery structure 23 to execute EME coupling with the outer ring electric machinery structure 23; or
(3) an EME coupling aspect of the mid ring electric machinery structure 22 in a direction facing the inner ring electric machinery structure 21 to execute EME coupling with the inner ring electric machinery structure 21; or
(4) an EME coupling aspect of the inner ring electric machinery structure 21 in a direction facing the mid ring electric machinery structure 22 to execute EME coupling with the mid ring electric machinery structure 22;
the EME coupling aspects of above item (1), (2), (3) and (4) are disposed with an PM magnetic pole 103 sandwiched by the permeable polar face 111 and the magnetic circuit 102 from the individual magnetic pole, and the type of the electric machinery structure between other respective electric machinery structures is selected upon its EME property thus to constitute a coaxial 3-ring type electric machinery provided with a PM magnetic pole 103 being sandwiched by the permeable polar face 111 and the magnetic circuit 102 from the individual magnetic pole.

7. The electric machinery provided with a PM magnetic pole sandwiched by a permeable polar face and a magnetic circuit as claimed in Claim 1, wherein the electric machinery is related to a coaxial 3-ring type electric machinery to engage coaxial operation by insertion of an inner ring, a mid ring, and an outer ring electric machinery structures including an inner ring electric machinery structure 21, a mid ring electric machinery structure 22, and an outer ring electric machinery structure 23 and is **characterized** as:
(1) an EME coupling aspect of the inner ring electric machinery structure 21 in a direction facing the mid ring electric machinery structure 22 to execute EME coupling with the mid ring electric machinery structure 22 and an EME coupling aspect of the mid ring electric machinery structure 22 in a direction facing the outer ring electric machinery structure 23 to execute EME coupling with the outer ring electric machinery structure 23; or
(2) an EME coupling aspect of the outer ring electric machinery structure 23 in a direction facing the mid ring electric machinery structure 22 to execute EME coupling with the mid ring electric machinery structure 22 and an EME coupling aspect of the mid ring electric machinery structure 22 in a direction facing the inner ring electric machinery structure 21 to execute EME coupling with the inner ring electric machinery structure 21; or
(3) an EME coupling aspect of the outer ring electric machinery structure 23 in a direction facing the mid ring electric machinery structure 22 to execute EME coupling with the mid ring electric machinery structure 22 and an EME coupling aspect of the inner ring electric machinery structure 21 in a direction facing the mid ring electric machinery structure 22 to execute EME coupling with the mid ring electric machinery structure 22; or
(4) two EME coupling aspects of the mid ring electric machinery structure 22 in a direction facing the outer ring electric machinery structure 23 and in another direction facing the inner ring electric machinery structure to respectively execute EME coupling with the mid ring electric machinery structure 22;
the EME coupling aspects of above item (1), (2), (3) and (4) are disposed with an PM magnetic pole 103 sandwiched by the permeable polar face 111 and the magnetic circuit 102 from the individual magnetic pole thus to constitute a coaxial 3-ring type electric machinery provided with a PM magnetic pole 103 being sandwiched by the permeable polar face 111 and the magnetic circuit 102 from the individual magnetic pole.

8. The electric machinery provided with a PM magnetic pole sandwiched by a permeable polar face and a magnetic circuit as claimed in Claim 1, wherein the electric machinery is related to a coaxial 3-ring type electric machinery to engage coaxial operation by insertion of an inner ring, a mid ring, and an outer ring electric machinery structures including an inner ring electric machinery structure 21, a mid ring electric machinery structure 22, and an outer ring electric machinery structure 23, and wherein the mid ring electric machinery structure 22 for executing EME coupling with the inner ring electric machinery structure 21 and the outer ring electric machinery structure 23 is disposed with an PM magnetic pole 103 to constitute magnetic pole; both polar faces at both ends of the PM magnetic pole 103 are each disposed with a permeable polar face 111, and through permeable polar face 111 the magnetic poles at both ends of the PM magnetic pole respectively execute coupling with the inner ring electric machinery structure 21 and the outer ring electric machinery structure 23 on both sides to execute EME interaction, thus to constitute a coaxial 3-ring type electric machinery provided with two permeable polar faces each disposed on two polar faces on both ends of the PM magnetic pole.

9. The electric machinery provided with a PM magnetic pole sandwiched by a permeable polar face and a magnetic circuit as claimed in Claim 1, wherein the electric machinery is related to a coaxial double layer type plate electric machinery comprised of two layers of electric machinery structure laminated to engage in coaxial operation includes an inner layer plate electric machinery structure 31 and an outer layer plate electric machinery structure 32, and wherein the PM magnetic pole 103 sandwiched by the permeable polar face 111 and the magnetic circuit 102 from the individual magnetic pole is disposed on an EME coupling aspect of the inner layer plate electric machinery structure 31 in a direction facing the outer layer plate electric machinery structure 32 to execute EME interaction with the outer layer plate electric machinery structure 32; or the PM magnetic pole 103 sandwiched by the permeable polar face 111 and the magnetic circuit 102 from the individual magnetic pole is disposed on an EME coupling aspect of an outer layer plate electric machinery structure 32 in a direction facing an inner layer plate electric machinery structure 31 to execute EME interaction with the inner layer plate electric machinery structure 31, thus to constitute a double layer type plate electric machinery provided with the PM magnetic pole sandwiched by the permeable polar face and the magnetic circuit from the individual magnetic pole.

10. The electric machinery provided with a PM magnetic pole sandwiched by a permeable polar face and a magnetic circuit as claimed in Claim 1, wherein the electric machinery is related to a coaxial 3-layer type plate electric machinery comprised of an inner layer, a mid layer, and an outer layer electric machinery structures laminated to engage coaxial operation includes an inner layer plate electric machinery structure 41, a mid layer plate electric machinery structure 42, and an outer layer plate electric machinery structure 43 and is **characterized** as:
(1) an EME coupling aspect of the inner layer plate electric machinery structure 41 in a direction facing the mid layer plate electric machinery structure 42; or
(2) an EME coupling aspect of the mid layer plate electric machinery structure 42 in a direction facing the inner layer plate electric machinery structure 41; or
(3) an EME coupling aspect of the outer layer plate electric machinery structure 43 in a direction facing the mid layer plate electric machinery structure 42; or
(4) an EME coupling aspect of the mid layer plate electric machinery structure 42 in a direction facing the outer layer plate electric machinery structure 43;
the EME coupling aspects of above item (1), (2), (3) and (4) are disposed with an PM magnetic pole 103 sandwiched by the permeable polar face 111 and the magnetic circuit 102 from the individual magnetic pole, and the type of the electric machinery structure between other respective electric machinery structures is selected upon its EME property thus to constitute a coaxial 3-layer type plate electric machinery provided with a PM magnetic pole 103 being sandwiched by the permeable polar face 111 and the magnetic circuit 102 from the individual magnetic pole.

11. The electric machinery provided with a PM magnetic pole sandwiched by a permeable polar face and a magnetic circuit as claimed in Claim 1, wherein the electric machinery is related to a coaxial 3-layer type plate electric machinery comprised of an inner layer, a mid layer, and an outer layer electric machinery structures laminated to engage coaxial operation includes an inner layer plate electric machinery structure 41, a mid layer plate electric machinery structure 42, and an outer layer plate electric machinery structure 43 and is **characterized** as:
(1) an EME coupling aspect of the inner layer plate electric machinery structure 41 in a direction facing the mid layer plate electric machinery structure 42 and an EME coupling aspect of the mid layer plate electric machinery structure 42 in a direction facing the outer layer plate electric machinery structure 43; or
(2) an EME coupling aspect of the outer layer plate electric machinery structure 43 in a direction facing the mid layer plate electric machinery structure 42 and an EME coupling aspect of the mid layer plate electric machinery structure 42 in a direction facing the inner layer plate electric machinery structure 41; or
(3) an EME coupling aspect of the inner layer plate electric machinery structure 41 in a direction facing the mid layer plate electric machinery structure 42 and an EME coupling aspect of the outer layer plate electric machinery structure 43 in a direction facing the mid layer plate electric machinery structure 42; or
(4) two EME coupling aspects on both sides of the mid layer plate electric machinery structure 42 in a direction facing the inner layer plate electric machinery structure 41 and in another direction facing the outer layer plate electric machinery structure 43;
the EME coupling aspects of above item (1), (2), (3) and (4) are disposed with an PM magnetic pole 103 sandwiched by the permeable polar face 111 and the magnetic circuit 102 from the individual magnetic pole thus to constitute a coaxial 3-layer type plate electric machinery provided with a PM magnetic pole 103 being sandwiched by the permeable polar face 111 and the magnetic circuit 102 from the individual magnetic pole.

12. The electric machinery provided with a PM magnetic pole sandwiched by a permeable polar face and a magnetic circuit as claimed in Claim 1, wherein the electric machinery is related to a coaxial 3-layer type plate electric machinery comprised of an inner layer, a mid layer, and an outer layer electric machinery structures laminated to engage coaxial operation includes an inner layer plate electric machinery structure 41, a mid layer plate electric machinery structure 42, and an outer layer plate electric machinery structure 43, and wherein the mid layer plate electric machinery structure 22 for executing EME coupling with the inner layer plate electric machinery structure 21 and the outer layer plate electric machinery structure 23 on both sides is disposed with an PM magnetic pole 103 to constitute magnetic pole; both polar faces at both ends of the PM magnetic pole 103 are each disposed with a permeable polar face 111, and through permeable polar face 111 the magnetic poles at both ends of the PM magnetic pole respectively execute coupling with the inner layer plate electric machinery structure 41 and the outer layer plate electric machinery structure 43 on both sides to execute EME interaction, thus to constitute a coaxial 3-layer type plate electric machinery provided with two permeable polar faces each disposed on two polar faces on both ends of the PM magnetic pole.

13. The electric machinery provided with a PM magnetic pole sandwiched by a permeable polar face and a magnetic circuit as claimed in Claim 1, wherein the electric machinery is related to a linearly coupled double layer type linear electric machinery comprised of two layers of linear electric machinery structures includes an inner layer linear electric machinery structure 51 and an outer layer linear electric machinery structure 52, and is **characterized** as:
the PM magnetic pole 103 sandwiched by the permeable polar face 111 and the magnetic circuit 102 from the individual magnetic pole is disposed on an EME coupling aspect of the inner layer linear electric machinery structure 51 in a direction facing the outer layer linear electric machinery structure 52 to execute EME interaction with the outer layer linear electric machinery structure 52; or the PM magnetic pole 103 sandwiched by the permeable polar face 111 and the magnetic circuit 102 from the individual magnetic pole is disposed on an EME coupling aspect of an outer layer linear electric machinery structure 52 in a direction facing an inner layer linear electric machinery structure 51 to execute EME interaction with the inner layer linear electric machinery structure 51, thus to constitute a double layer type linear electric machinery provided with the PM magnetic pole sandwiched by the permeable polar face and the magnetic circuit from the individual magnetic pole

14. The electric machinery provided with a PM magnetic pole sandwiched by a permeable polar face and a magnetic circuit as claimed in Claim 1, wherein a linearly coupled 3-layer type linear electric machinery comprised of a inner layer, a mid layer, and an outer layer linear electric machinery structures includes an inner layer linear electric machinery structure 61, a mid layer linear electric machinery structure 62, and an outer layer linear electric machinery structure 63 and is **characterized** as:
(1) an EME coupling aspect of the inner layer linear electric machinery structure 61 in a direction facing the mid layer linear electric machinery structure 62; or
(2) an EME coupling aspect of the mid layer linear electric machinery structure 62 in a direction facing the inner layer linear electric machinery structure 61; or
(3) an EME coupling aspect of the outer layer linear electric machinery structure 63 in a direction facing the mid layer linear electric machinery structure 62; or
(4) an EME coupling aspect of the mid layer linear electric machinery structure 62 in a direction facing the outer layer linear electric machinery structure 63;
the EME coupling aspects of above item (1), (2), (3) and (4) are disposed with an PM magnetic pole 103 sandwiched by the permeable polar face 111 and the magnetic circuit 102 from the individual magnetic pole, and the type of the electric machinery structure between other respective electric machinery structures is selected upon its EME property thus to constitute a coaxial 3-layer type plate electric machinery provided with a PM magnetic pole 103 being sandwiched by the permeable polar face 111 and the magnetic circuit 102 from the individual magnetic pole.

15. An electric machine provided with a PM magnetic pole (103) sandwiched between a permeable polar face (111) and a magnetic circuit associated with an individual magnetic pole.
